(19) Europäisches Patentamt
European Patent Office
Office européen des brevets

(11) **EP 3 949 710 B1**

(12) **EUROPÄISCHE PATENTSCHRIFT**

(45) Veröffentlichungstag und Bekanntmachung des Hinweises auf die Patenterteilung:
**18.10.2023  Patentblatt 2023/42**

(21) Anmeldenummer: **21183862.8**

(22) Anmeldetag: **06.07.2021**

(51) Internationale Patentklassifikation (IPC):
**A01C 17/00** (2006.01)

(52) Gemeinsame Patentklassifikation (CPC):
**A01C 17/001; A01C 17/006**

(54) **VERFAHREN ZUR REGELUNG DES STREUGUT-MASSENSTROMES VON SCHEIBENSTREUERN UND SCHEIBENSTREUER ZUR DURCHFÜHRUNG EINES SOLCHEN VERFAHRENS**

METHOD FOR CONTROLLING THE MASS FLOW OF PRODUCT FOR DISTRIBUTION FROM DISC SPREADERS, DISC SPREADER FOR CARRYING OUT SUCH A METHOD

PROCÉDÉ DE RÉGULATION DU FLUX MASSIQUE DE PRODUIT D'ÉPANDAGE PROVENANT DES ÉPANDEURS À DISQUES ET ÉPANDEUR À DISQUES PERMETTANT LA MISE EN OEUVRE D'UN TEL PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2020   DE 102020120409**

(43) Veröffentlichungstag der Anmeldung:
**09.02.2022   Patentblatt 2022/06**

(73) Patentinhaber: **RAUCH Landmaschinenfabrik GmbH**
**76547 Sinzheim (DE)**

(72) Erfinder: **Stöcklin, Volker**
**77975 Ringsheim (DE)**

(74) Vertreter: **Lichti - Patentanwälte Partnerschaft mbB**
**Bergwaldstrasse 1**
**76227 Karlsruhe (DE)**

(56) Entgegenhaltungen:
**EP-A2- 2 767 149        EP-B1- 3 241 421**
**DE-A1-102012 111 144**

**Beschreibung**

Die Erfindung betrifft ein Verfahren zur Regelung des Ist-Massenstromes an Streugut wenigstens eines regelbaren Dosierorgans eines Scheibenstreuers mit wenigstens einer, dem Dosierorgan zugeordneten und mit wenigstens einer Wurfschaufel versehenen Verteilerscheibe, wobei ein Soll-Massenstrom an Streugut in Abhängigkeit wenigstens eines Parameters aus der Gruppe

- Fahrgeschwindigkeit des Scheibenstreuers;
- Soll-Streumenge pro Fläche; und
- Arbeitsbreite

ermittelt und dieser Soll-Massenstrom einem rechnergestützten Regelgerät als Führungsgröße eingegeben wird, wobei ferner als Regelgröße das für den Ist-Massenstrom repräsentative Drehmoment wenigstens einer Welle in einem Antriebsstrang der Verteilerscheibe sensorisch ermittelt, an das Regelgerät übermittelt und hieraus der Ist-Massenstrom anhand wenigstens eines in dem Regelgerät oder in einer diesem zugeordneten Speichereinrichtung hinterlegten funktionalen Zusammenhangs zwischen dem Drehmoment und dem auf die Verteilerscheibe auftreffenden Massenstrom an Streugut ermittelt wird, woraufhin die Abweichung des Ist-Massenstromes an Streugut von dem Soll-Massenstrom an Streugut ermittelt und eine für die Öffnungsstellung des Dosierorgans repräsentative Stellgröße generiert wird, um das Dosierorgan auf den Soll-Massenstrom nachzuregeln.

Die Erfindung bezieht sich ferner auf einen insbesondere zur Durchführung eines solchen Verfahrens geeigneten Scheibenstreuer mit wenigstens einer Verteilerscheibe, welche mit wenigstens einer Wurfschaufel versehen ist, und mit wenigstens einem der Verteilerscheibe zugeordneten, von einem rechnergesteuerten Regelgerät regelbaren Dosierorgan, wobei das Regelgerät einerseits mit wenigstens einem Sensor zur Erfassung des für den Ist-Massenstrom repräsentativen Drehmomentes wenigstens einer Welle in einem Antriebsstrang der Verteilerscheibe als Regelgröße, andererseits mit einer Eingabeeinrichtung in Wirkverbindung steht und das Regelgerät zur Ermittlung der Abweichung des Ist-Massenstromes an Streugut von einem als Führungsgröße dienenden Soll-Massenstrom ausgebildet ist, welcher in die Eingabeeinrichtung des Regelgerätes eingebbar ist und/oder welchen das Regelgerät in Abhängigkeit wenigstens eines in dessen Eingabeeinrichtung eingebbaren Parameters aus der Gruppe

- Fahrgeschwindigkeit des Scheibenstreuers;
- Soll-Streumenge pro Fläche; und
- Arbeitsbreite

ermittelt, und wobei das Regelgerät ferner zur Generierung einer für die Öffnungsstellung des Dosierorgans repräsentativen Stellgröße anhand wenigstens eines in dem Regelgerät oder in einer diesem zugeordneten Speichereinrichtung hinterlegten funktionalen Zusammenhangs zwischen dem Drehmoment und dem auf die Verteilerscheibe auftreffenden Massenstrom an Streugut ausgebildet ist, um das Dosierorgan auf den Soll-Massenstrom nachzuregeln.

Derartige Scheibenstreuer finden insbesondere in Form von Zweischeiben-Düngerstreuern in der Landwirtschaft zur Verteilung von Streugut, wie mineralischem und organischem Dünger und dergleichen, aber auch in Form von Winterdienststreuern zur Verteilung von Streusalz und/oder Splitt verbreiteten Einsatz. Ihre Vorteile liegen dabei vornehmlich in ihrer einfachen Bedienbarkeit und hohen Leistungsfähigkeit bei verhältnismäßig geringen Investitionskosten. Insbesondere im Falle von landwirtschaftlichen Scheibenstreuern haben sich vornehmlich Zweischeiben-Düngerstreuer etabliert, welche mit einem Paar von Verteilerscheiben mit diesen zugeordneten Dosierorganen ausgestattet sind.

Um für die gewünschte Verteilung des Streugutes auf dem Boden zu sorgen, lassen sich bei gattungsgemäßen Scheibenstreuern einerseits die Dosierung des Massenstromes des Streugutes auf die einem jeweiligen Dosierorgan zugeordnete Verteilerscheibe, andererseits die Verteilung des Streugutes durch die Verteilerscheibe(n) einstellen bzw. regeln. Für letzteres ist es üblich, Einstellmittel zum Einstellen des Scheibenstreuers auf verschiedene Arbeitsbreiten, Streugüter und/oder Verteilarten vorzusehen, wie beispielsweise Einrichtungen zur Verstellung des Aufgabepunktes des Streugutes auf die Verteilerscheibe(n), veränderbare Drehzahlen der Verteilerscheiben etc. Darüber hinaus hat es sich in der Praxis bewährt, für verschiedene Streu- bzw. Arbeitsbreiten(intervalle) Verteilerscheibensätze mit einer Mehrzahl an verschiedenen Verteilerscheiben und/oder an mit verschiedenen Wurfschaufeln versehenen Verteilerscheiben einzusetzen, da es für die Qualität des Streuergebnisses bei mit umlaufenden Verteilerscheiben ausgerüsteten, gattungsgemäßen Scheibenstreuern auf eine möglichst gleichmäßige Verteilung des Streugutes auf dem Boden ankommt, wie beispielsweise der zu bestreuenden Fläche eines Feldes, was mittels ein und derselben Verteilerscheibe für sehr unterschiedliche Streu- bzw. Arbeitsbreiten nicht zu bewerkstelligen ist.

Während des Betriebs wird das der umlaufenden Verteilerscheibe mittels der dieser zugeordneten, oberhalb derselben positionierten Dosiereinrichtung aufgegebene Streugut nach außen in Richtung der Scheibenumfangs beschleunigt, woraufhin es etwa fächerartig über einen bestimmten Abwurfbereich abgeschleudert wird, wonach das Streugut dann mit Abstand von der Verteilerscheibe in einem im wesentlichen ringsegmentförmigen Bereich, dem sogenannten Streuringsektor, auf den Boden fällt. Dabei ist die Massenverteilung des Streugutes quer zur Fahrtrichtung des Scheibenstreuers, also über seine Streubreite hinweg, nicht gleichmäßig, sondern nimmt die Massenverteilung in aller Regel von einem Maximum im mittleren Bereich zu beiden Seiten hin ab. Durch die Anordnung von zwei gegenläufig angetriebenen Verteilerscheiben nebeneinander, wie sie bei Zweischeibenstreuern üblich sind, lässt sich die Querverteilung des Streugutes im Bereich zwischen den Verteilerscheiben sowie in nahem Lateralabstand von denselben vergleichmäßigen, fällt aber gleichwohl zu beiden Seiten des so erhaltenen, gesamten Streubildes ab, wobei dies bei Düngerstreuern durch das sogenannte Anschlussfahren ausgeglichen wird, indem die Streubilder im Randbereich überlappt werden. Es ergibt sich hier folglich eine Arbeitsbreite, welche dem Abstand der beim Anschlussfahren genutzten Fahrgassen entspricht und welche grundsätzlich kleiner ist als die (gesamte) Streubreite, welche beispielsweise etwa doppelt so groß wie die Arbeitsbreite sein kann. In anderen Anwendungsfällen, wie insbesondere bei Winterdienststreuern, wird hingegen versucht, ein möglichst steilflankiges Streubild zu erreichen, da ein Anschlussfahren hier nicht möglich ist.

In Bezug auf die Dosierung des Streugutes hat es sich bewährt, dass ein rechnergestütztes Regelgerät einen Soll-Massenstrom an zu verteilendem Streugut aus einem oder insbesondere mehreren wählbaren Parametern, wie der aktuellen Fahrgeschwindigkeit, der Soll-Streumenge pro Flächeneinheit, der gewünschten Arbeitsbreite etc., ermittelt und das Dosierorgan gemäß dem derart ermittelten Soll-Massenstrom regelt, was beispielsweise anhand wenigstens einer oder mehrerer in dem Rechner hinterlegten Kennlinien, Kennkurven oder Kennfeldern geschehen kann, welche die Korrelation des jeweiligen Parameters mit dem zugehörigen Massenstrom an Streugut beschreiben.

Was die Streugutdosierung betrifft, so haben sich insbesondere zwei verschiedene Varianten zur Messung und Regelung des Ist-Massenstromes an Streugut durchgesetzt:
Gemäß einer ersten Variante zur Messung und Regelung des auf die Verteilerscheibe aufgegebenen Ist-Massenstromes an Streugut wird der gesamte Streugutbehälter des Scheibenstreuers fortwährend, d.h. auch während der Fahrt, mittels Wiegezellen gewogen, so dass sich aus dem pro Zeiteinheit ermittelten Gewichtsverlust der tatsächliche Massenstrom des Streugutes errechnen lässt (vgl. z.B. die EP 0 982 571 A1). Als nachteilig hat sich indes einerseits erwiesen, dass mit einer solchen Wiegetechnik nur der gesamte Massenstrom an Streugut ermittelt werden kann, was es im Falle eines Zweischeibenstreuers, bei welchem die Verteilerscheiben häufig mit unterschiedlichen Massenströmen an Streugut beaufschlagt werden müssen (sofern z.B. eine unterschiedliche Streubreite auf beiden Seiten erwünscht ist), unmöglich macht, die einzelnen Massenströme (pro Verteilerscheibe) zu ermitteln. Andererseits ist das mit Wiegezellen ausgestattete System verhältnismäßig träge, weil die pro Zeiteinheit dosierte Masse des Streugutes im Verhältnis zu der Gesamtmasse des Streugutbehälters sehr klein ist und daher eine zeitlich relativ lange Mittelung der von den Wiegezellen ermittelten Messwerte erforderlich ist. Dies ist umso problematischer, je erschütterungsintensiver die Fahrt des Scheibenstreuers auf unebenem Untergrund vonstatten geht.

Die DE 10 2012 111 144 A1 beschreibt einen solchen Wiegestreuer, bei welchem als Regelgröße der für den mittels des Dosierorgans dosierten Ist-Massenstrom an Verteilgut repräsentative Gewichtsverlust des Streuers mittels einer Wiegezelle ermittelt, an das Regelgerät übermittelt und hieraus der Ist-Massenstrom anhand von in dem Regelgerät hinterlegten Kurven oder Kenndaten ermittelt wird. Mit dem Regelgerät in Verbindung steht ferner eine Einrichtung zur Ermittlung der Neigung des Streuers, um die Öffnungsweite des Dosierorgans in Abhängigkeit von dem Fließverhalten verschiedener Düngermaterialien, welches sich mit der Neigung des Steuers verändert, zu modifizieren.

Gemäß einer der vorgenannten ersten Variante hinsichtlich Messgenauigkeit und Störanfälligkeit deutlich überlegenen zweiten Variante wird zur Messung und Regelung des Massenstromes an Streugut das für diesen Massenstrom repräsentative Drehmoment in einem Antriebsstrang eines Antriebs der bzw. einer jeden Verteilerscheibe ermittelt, welches sich daraus ergibt, dass das auf die Verteilerscheibe(n) auftreffende Streugut mittels deren Wurfschaufeln von der Scheibe fort beschleunigt wird. Die DE 198 25 917 A1 beschreibt einen gattungsgemäßen Scheibenstreuer zum Verteilen von Streugut mit variabler Arbeitsbreite und bei variabler Fahrzeuggeschwindigkeit, welcher einen Vorratsbehälter, eine oder zwei rotatorisch angetriebene Verteilerscheibe(n) mit Wurfschaufeln, Mittel zum Einstellen des Scheibenstreuers auf verschiedene Arbeitsbreiten und Düngersorten sowie verstellbare Dosierorgane aufweist, welche von einem rechnergestützten Regelgerät steuerbar sind. In den Rechner sind die Fahrgeschwindigkeit, die Sollstreumenge pro Fläche, also der Soll-Massenstrom, und die Arbeitsbreite eingebbar. Ferner sind in dem Rechner für jede Einstellung der Einstellmittel Kennlinien oder -kurven für den funktionalen Zusammenhang zwischen dem sensorisch erfassten Drehmoment der Verteilerscheibe und dem Soll-Massenstrom in Abhängigkeit von der Drehzahl einschließlich einer Leerlauf-Kennlinie für den Massenstrom null hinterlegt. Mittels je eines Sensors werden das Drehmoment und die Drehzahl des Rotationsantriebs der Verteilerscheibe(n) aufgenommen. Die Ausgangsgröße des Drehmomentsensors vergrößert sich mit zunehmendem Ist-Massenstrom. Nach Abgleich mit dem Soll-Massenstrom unter gleichzeitiger Kompensation eventueller Drehzahlschwankungen wird die Abweichung als Stellgröße für das Dosierorgan, wie z.B. für einen Dosierschieber desselben, genutzt. Während bei einem hydraulischen Antrieb der Verteilerscheibe(n) der Druckabfall des Hydromotors sensorisch ermittelt wird, wird bei einem elektrischen Antrieb der Verteilerscheibe(n) die Stromaufnahme des Elektromotors sensorisch erfasst. Im Falle eines mechanischen Antriebs der Verteilerscheibe(n) kommen Dehnungsmessstreifen und/oder Schleifkontakte zum Einsatz.

Die EP 0 963 690 A1, welche die Priorität der vorgenannten DE 198 25 917 A1 in Anspruch nimmt, beschreibt einen ähnlichen Scheibenstreuer, wobei zur Ermittlung des Drehmomentes der Verteilerscheiben im Falle eines mechanischen Antriebs derselben ferner zwei auf einer Querwelle, welche die jeweiligen, die Verteilerscheiben tragenden, vertikalen Wellen über Kegelzahnräder antreibt, mit Abstand angeordnete Inkrementalgeber vorgesehen sind, welchen Impulsaufnehmer zugeordnet sind, um die Torsion der Welle bzw. das hierfür repräsentative Drehmoment zu erfassen. Im Leerlauf, d.h. ohne Beaufschlagung der Verteilerscheiben bei geschlossenem Dosierorgan, ergibt sich folglich einerseits ein Maß für das Leerlaufdrehmoment, während andererseits im Falle einer Beaufschlagung der Verteilerscheiben mit einem Soll-Massenstrom an Streugut die Impulsaufnehmer eine Phasenverschiebung erkennen, welche für das Gesamtdrehmoment, welches aus der Subtraktion des Leerlaufdrehmomentes von dem Ist-Massenstrom-Drehmoment resultiert, repräsentativ ist. Ferner sind zur Erfassung des Drehmomentes der Verteilerscheibe(n) Torsionssensoren geeignet, wie sie beispielsweise in Form von Magnetostriktionssensoren aus der EP 2 625 945 A1 bekannt sind.

Weitere Scheibenstreuer mit einer Steuerung bzw. Regelung ihrer Dosierorgane auf Basis der Abhängigkeit des auf die Verteilerscheiben auftreffenden Massenstromes an Streugut von dem Drehmoment der Verteilerscheiben sind beispielsweise aus den EP 3 081 067 A1 und EP 2 767 149 A1 bekannt, wobei insbesondere im Falle eines Zweischeibenstreuers jeder Verteilerscheibe je ein mittels eines rechnergestützten Regelgerätes unabhängig voneinander regelbares Dosierorgan zugeordnet sein kann, um wahlweise ein symmetrisches Streubild (beiden Dosierorganen werden dieselben Soll-Massenströme an Streugut vorgegeben, z.B. für das Normalstreuen) oder auch ein asymmetrisches Streubild zu erzeigen (den Dosierorganen werden unterschiedliche Soll-Massenströme an Streugut vorgegeben, z.B. für das Rand- oder Grenzstreuen an Feldrändern, bei der Hangfahrt und dergleichen).

In der EP 3 241 421 B1 geht es um ein weiteres Steuersystem bzw. um ein Verfahren zur Steuerung eines Zweischeibenstreuers, indem die Drehzahl der Verteilerscheiben, der Aufgabepunkt und der Massenstrom an Streugut in Abhängigkeit des mittels eines ersten Sensors, wie eines Radarsensors, ermittelten Abwurfwinkels sowie der mittels eines zweiten Sensors, wie eines weiteren Radarsensors, ermittelten Wurfweite nach einer entsprechenden Kalibrierung automatisch gesteuert bzw. geregelt wird. Auf diese Weise soll eine vollautomatische Steuerung des Scheibenstreuers möglich sein, indem lediglich die gewünschte Arbeitsbreite als Sollwert in das Steuersystem eingegeben wird. Der Massenstrom an Streugut kann mittels eines vierten Sensors ermittelt werden, bei welchem es sich um eine Wiegeeinrichtung oder einen Drehmomentsensor im Antriebsstrang der Verteilerscheiben handeln kann. Darüber hinaus kann eine optionale Neigungsmesseinrichtung zum Messen einer ersten Hangneigung in Fahrtrichtung und einer zweiten Hangneigung orthogonal zur Fahrtrichtung des Scheibenstreuers vorgesehen sein, um in Abhängigkeit der Topologie ein asymmetrisches Streubild einstellen zu können, indem für den Massenstrom an Streugut, den Aufgabepunkt und/oder die Drehzahl rechts und links unabhängige Soll-Werte vorgegeben werden.

Als ein Problem des gattungsgemäßen Verfahrens zur Regelung des Ist-Massenstromes von Scheibenstreuern auf der Basis des auf eine jeweilige Verteilerscheibe infolge des Ist-Massenstromes an Verteilgut einwirkenden Drehmomentes hat es sich allerdings nun erwiesen, dass mit zunehmender Neigung des Scheibenstreuers in Bezug auf die Horizontalebene, wie sie beispielsweise bei der Fahrt hangauf- oder hangabwärts sowie auch parallel oder schräg zu einer Hanglage auftreten kann, Dosierfehler verursacht werden, so dass es im Falle von landwirtschaftlichen Düngerstreuern zu zumindest lokalen Über- und Unterdüngungen kommen kann, die es aus Umweltschutz- und Ertragsgründen sowie aus Kostengründen zu verhindern gilt. Ähnliches gilt für Winterdienst-Streumaschinen, welche gleichfalls ein Ausbringen des Streugutes in der vorgesehenen Menge pro Flächeneinheit sicherstellen müssen.

Während zur Kompensation von neigungsbedingten Beeinträchtigungen des Streubildes bereits Maßnahmen zur Verfügung stehen, wie beispielsweise die Veränderung des Aufgabepunktes des Streugutes auf die jeweilige Verteilerscheibe, der Drehzahl einer jeweiligen Verteilerscheiben (vgl. z.B. die EP 2 415 338 A1, EP 3 305 055 A1 oder EP 3 305 056 A1) oder auch des einer jeweiligen Verteilerscheibe zudosierten Massenstromes an Streugut, wurde das vorgenannte Problem einer Beeinträchtigung der auf einer sensorischen Erfassung des Drehmomentes der Verteilerscheiben basierenden Dosiergenauigkeit an Hanglagen bislang nicht erkannt bzw. stillschweigend akzeptiert.

Der Erfindung liegt daher die Aufgabe zugrunde, ein Verfahren zur Regelung des Ist-Massenstromes an Streugut wenigstens eines regelbaren Dosierorgans eines Scheibenstreuers sowie einen insbesondere zur Durchführung eines solchen Verfahrens geeigneten Scheibenstreuer der eingangs genannten Art auf einfache und kostengünstige Weise dahingehend weiterzubilden, dass die Dosiergenauigkeit während einer Schrägstellung des Scheibenstreuers, wie sie z.B. bei der Fahrt an Hanglagen auftritt, verbessert wird.

In verfahrenstechnischer Hinsicht wird diese Aufgabe bei einem gattungsgemäßen Verfahren der eingangs genannten Art dadurch gelöst, dass wenigstens eine Neigung des Scheibenstreuers um wenigstens eine horizontale Achse ermittelt und an das Regelgerät übermittelt wird, und dass der in dem Regelgerät oder in der diesem zugeordneten Speichereinrichtung hinterlegte funktionale Zusammenhang zwischen dem Drehmoment und dem auf die Verteilerscheibe auftreffenden Massenstrom an Streugut in Abhängigkeit von der Neigung des Scheibenstreuers um die wenigstens eine horizontale Achse modifiziert wird, um die für die Öffnungsstellung des Dosierorgans repräsentative Stellgröße unter Berücksichtigung der Neigung des Scheibenstreuers zu generieren.

Zur Lösung dieser Aufgabe sieht die Erfindung bei einem Scheibenstreuer der eingangs genannten Art überdies vor, dass in die Eingabeeinrichtung ferner die Neigung des Scheibenstreuers um wenigstens eine horizontale Achse eingebbar und/oder das Regelgerät ferner mit wenigstens einem Neigungssensor zur Ermittlung der Neigung des Scheibenstreuers um wenigstens eine horizontale Achse in Wirkverbindung steht, und dass das Regelgerät zur Modifizierung des dort oder in der diesem zugeordneten Speichereinrichtung hinterlegten funktionalen Zusammenhangs zwischen dem Drehmoment und dem auf die Verteilerscheibe auftreffenden Massenstrom an Streugut in Abhängigkeit von der Neigung des Scheibenstreuers um die wenigstens eine horizontale Achse ausgebildet ist, um die für die Öffnungsstellung des Dosierorgans repräsentative Stellgröße unter Berücksichtigung der Neigung des Scheibenstreuers zu generieren.

Die erfindungsgemäße Ausgestaltung beruht auf der Erkenntnis, dass einerseits das Drehmoment infolge des auf die Verteilerscheibe auftreffenden Massenstromes an Streugut von dem Aufgabepunkt des Streugutes auf die Verteilerscheibe abhängt, wobei das Drehmoment umso größer ist, je weiter innen oder je näher zur Drehachse der Verteilerscheibe das Streugut auf die Verteilerscheibe auftrifft, wohingegen das Drehmoment umso kleiner ist, je weiter außen oder je näher zum Außenumfang der Verteilerscheibe bzw. je näher am radial äußeren, freien Ende der Wurfschaufel(n) oder der längsten Wurfschaufel der Verteilerscheibe das Streugut auf die Verteilerscheibe auftrifft. Andererseits kann eine Neigung des Scheibenstreuers bezüglich der Horizontalebene zu einer Veränderung des Aufgabepunktes des Streugutes auf die Verteilerscheibe führen, da das Streugut stets vertikal aus einer Dosieröffnung des Dosierorgans heraus fällt und bei geneigtem Scheibenstreuer somit an einer anderen Stelle auf die Verteilerscheibe auftrifft als im Falle einer "normalen" horizontalen Ausrichtung des Scheibenstreuers. Ändert sich nun der Aufgabepunkt des Streugutes auf die Verteilerscheibe bei zunehmender Neigung des Scheibenstreuers in Bezug auf die Horizontalebene, so führt dies folglich zu einem in Abhängigkeit der Neigung des Scheibenstreuers veränderten Drehmoment, so dass die Ermittlung der für die Öffnungsstellung des Dosierorgans repräsentativen Stellgröße anhand des in dem Regelgerät oder dessen Speichereinrichtung hinterlegten funktionalen Zusammenhangs zwischen dem - infolge Neigung des Scheibenstreuers veränderten Aufgabepunkt und folglich veränderten - Drehmoment und dem Ist-Massenstrom fehlerbehaftet ist und es daher zu Fehldosierungen des Dosierorgans kommen kann.

Dem begegnet die Erfindung nun dadurch, dass die Neigung des Scheibenstreuers um wenigstens eine, vorzugsweise um zwei oder mehrere, horizontale Achse(n) ermittelt und an das Regelgerät übermittelt wird. Dem Regelgerät wird also der Neigungswinkel des Scheibenstreuers um die (jeweilige) horizontale Achse mitgeteilt, was - wie weiter unten noch näher erläutert - zweckmäßigerweise kontinuierlich und in Echtzeit geschehen kann. Der in dem Regelgerät oder in dessen Speichereinrichtung hinterlegte funktionale Zusammenhang zwischen dem Drehmoment und dem auf die Verteilerscheibe auftreffenden Massenstrom an Streugut wird sodann in Abhängigkeit der Neigung des Scheibenstreuers um die wenigstens eine horizontale Achse modifiziert, um die neigungsbedingte Abweichung des Aufgabepunktes zu kompensieren, so dass die für die Öffnungsstellung des Dosierorgans repräsentative Stellgröße unter Berücksichtigung der Neigung des Scheibenstreuers generiert wird und neigungsbedingte Über- und Unterdosierungen zuverlässig vermieden werden. Bei der für die Öffnungsstellung des Dosierorgans repräsentativen Stellgröße kann es sich beispielsweise um die Drehzahl eines Dosierrades, wie eines Zellen-, Nockenrades oder dergleichen, eines nach Art einer Zellen- bzw. Nockenradschleuse ausgestalteten Dosierorgans handeln, oder die Stellgröße kann beispielsweise die jeweilige Stellung eines Stellorgans, z.B. in Form einer elektrischen, hydraulischen oder pneumatischen Kolben-/Zylindereinheit, eines Servomotors etc., eines Dosierschiebers des Dosierorgans betreffen, welcher mit einer Dosieröffnung zusammenwirkt.

Gemäß einer Ausführungsvariante des erfindungsgemäßen Verfahrens kann der wenigstens eine funktionale Zusammenhang zwischen dem Drehmoment und dem auf die Verteilerscheibe auftreffenden Massenstrom an Streugut beispielsweise auf der Basis einer Mehrzahl an in dem Regelgerät oder in der diesem zugeordneten Speichereinrichtung hinterlegten funktionalen Zusammenhängen zwischen dem Drehmoment und dem auf die Verteilerscheibe auftreffenden Massenstrom an Streugut und/oder auf der Basis einer Mehrzahl an dort hinterlegten Korrekturfaktoren modifiziert werden, welche insbesondere empirisch im Rahmen von Streuversuchen, vorzugsweise bei verschiedenen Drehzahlen der Verteilerscheiben, unter Verwendung verschiedener Verteilerscheiben und/oder Streugüter, bei verschiedenen Aufgabepunkten, bei verschiedenen Massenströmen an Streugut etc., für verschiedenen Neigungen des Scheibenstreuers ermittelt worden sind, wobei das Regelgerät in Abhängigkeit der aktuellen Neigung des Scheibenstreuers sowie vorzugsweise in Abhängigkeit der weiteren vorgenannten Parameter den zugehörigen, empirisch ermittelten funktionalen Zusammenhang und/oder den zugehörigen Korrekturfaktor auswählt und auf diese Weise die für die Öffnungsstellung des Dosierorgans repräsentative Stellgröße unter Berücksichtigung der Neigung des Scheibenstreuers zu generiert.

Stattdessen kann gemäß einer vorteilhaften Ausführungsvariante vorgesehen sein, dass der wenigstens eine funktionale Zusammenhang zwischen dem Drehmoment und dem auf die Verteilerscheibe auftreffenden Massenstrom an Streugut um wenigstens eine von der Neigung des Scheibenstreuers abhängige Korrekturgröße des Aufgaberadius' des Streugutes auf die Verteilerscheibe modifiziert wird. Auf diese Weise wird der neigungsbedingten Veränderung des Aufgabepunktes des Streugutes auf die Verteilerscheibe Rechnung getragen, wobei der für die Veränderung des Drehmomentes vornehmlich ursächliche Aufgaberadius, also der Abstand des Aufgabepunktes vom Drehzentrum der Verteilerscheibe, mit der neigungsabhängigen Korrekturgröße modifiziert wird, um die Veränderung des Drehmomentes aufgrund neigungsbedingt verändertem Aufgabepunkt zu kompensieren.

Die Korrekturgröße $\Delta r$ des Aufgaberadius' des Streugutes auf die Verteilerscheibe kann beispielsweise von der allgemeinen Formel

$$\Delta r = h \cdot \tan(\alpha)$$

abgeleitet sein, wobei es sich

- bei $\Delta r$ um die neigungsbedingte Abweichung des Aufgaberadius ($r_0$) auf die Verteilerscheibe,
- bei $h$ um den Abstand einer oberhalb der Verteilerscheibe angeordneten Dosieröffnung des Scheibenstreuers von der mit der wenigstens einen Wurfschaufel versehenen Verteilerscheibe, welcher der "Fallhöhe" des Streugutes bei horizontaler Ausrichtung des Scheibenstreuers entspricht, nachdem das Streugut aus der Dosieröffnung des Dosierorgans austritt und bevor es auf die Verteilerscheibe auftritt und von deren Wurfschaufel(n) radial nach außen beschleunigt wird, und
- bei $\alpha$ um die Neigung des Scheibenstreuers um die wenigstens eine horizontale Achse

handelt. Diese von dem Neigungswinkel - sei er positiv im Falle einer Neigung um die im Wesentlichen eine horizontale Achse in die eine Richtung oder sei er negativ im Falle einer Neigung um die im Wesentlichen eine horizontale Achse in die andere Richtung - abhängige (positive oder negative) Korrekturgröße kann dann zweckmäßigerweise zu dem Aufgaberadius' ($r_0$) des Streugutes auf die Verteilerscheibe addiert werden, um die neigungsbedingte Verlagerung des Aufgabepunktes an Streugut auf die Verteilerscheibe und das hierdurch veränderte Drehmoment zu kompensieren.

Der wenigstens eine funktionale Zusammenhang zwischen dem Drehmoment (M) und dem auf die Verteilerscheibe auftreffenden Massenstrom (m) an Streugut kann beispielsweise von der allgemeinen Formel

$$M = \dot{m} \cdot \omega \{R^2 - 0{,}5 \cdot [r_0 + h \cdot \tan(\alpha)]^2\} \cdot K_S$$

abgeleitet sein, wobei es sich

- bei $M$ um das - sensorisch ermittelte - Drehmoment der Verteilerscheibe,
- bei $m$ um den auf die Verteilerscheibe auftreffenden Massenstrom an Streugut, d.h. um den Ist-Massenstrom an Streugut ($\dot{m}_{ist}$),
- bei $\omega$ um einen von der Drehzahl (n) der Verteilerscheibe abhängigen Faktor, wobei $\omega$ insbesondere durch $\omega = 2\pi \cdot n$ definiert sein und folglich die Einheit $s^{-1}$ besitzen kann,
- bei $R$ um den größten Radius der mit der wenigstens einen Wurfschaufel versehenen Verteilerscheibe, also insbesondere um den Abstand vom Drehzentrum der Verteilerscheibe bis zu dem radial äußeren Ende der (längsten) Wurfschaufel der Verteilerscheibe,
- bei $r_0$ um den Aufgaberadius' des Streugutes auf die Verteilerscheibe, welcher - wie weiter unten noch näher erläutert - insbesondere mittels einer Aufgabepunkt-Verstelleinrichtung des Scheibenstreuers veränderbar sein kann,
- bei $h$ um den Abstand einer oberhalb der Verteilerscheibe angeordneten Dosieröffnung des Scheibenstreuers von der mit der wenigstens einen Wurfschaufel versehenen Verteilerscheibe,
- bei $\alpha$ um die Neigung - oder genauer: um den Neigungswinkel - des Scheibenstreuers um die wenigstens eine horizontale Achse, und
- bei $K_S$ um einen von der Geometrie der Verteilerscheibe und/oder deren wenigstens einer Wurfschaufel abhängigen, insbesondere dimensionslosen, Faktor

handelt.

Wie bereits angedeutet, kann in vorteilhafter Ausgestaltung vorgesehen sein, dass die Neigung des Scheibenstreuers sowohl um wenigstens eine erste horizontale Achse als auch um wenigstens eine unter einem Winkel von größer 0 in Bezug auf die erste horizontale Achse angeordnete zweite horizontale Achse ermittelt und an das Regelgerät übermittelt wird. Der wenigstens eine funktionale Zusammenhang zwischen dem Drehmoment und dem auf die Verteilerscheibe auftreffenden Massenstrom an Streugut kann in diesem Fall in Abhängigkeit sowohl der Neigung des Scheibenstreuers um die erste horizontale Achse als auch um die zweite horizontale Achse modifiziert werden, um die für die Öffnungsstellung des Dosierorgans repräsentative Stellgröße unter Berücksichtigung der Neigung des Scheibenstreuers sowohl um die erste als auch um die zweite horizontale Achse zu generieren, so dass beliebige Neigungen des Scheibenstreuers in Bezug auf die Horizontalebene kompensiert werden können.

In diesem Zusammenhang kann es sich als zweckmäßig erweisen, wenn die erste horizontale Achse und die zweite horizontale Achse im Wesentlichen senkrecht zueinander angeordnet sind, wobei sich insbesondere die erste horizontale Achse im Wesentlichen in Fahrtrichtung und die zweite horizontale Achse im Wesentlichen senkrecht zur Fahrtrichtung des Scheibenstreuers erstrecken. Auf diese Weise lassen sich sowohl Neigungen des Scheibenstreuers in Form eines Rollens bei der Fahrt an einem Hang entlang einer Höhenlinie (der Scheibenstreuer neigt sich um die sich etwa parallel zur Fahrtrichtung erstreckende erste horizontale Achse) als auch Neigungen des Scheibenstreuers in Form eines Nickens bei der Fahrt hangauf- oder hangabwärts (der Scheibenstreuer neigt sich um die sich etwa senkrecht zur Fahrtrichtung erstreckende zweite horizontale Achse) und folglich auch beliebige Neigungen des Scheibenstreuers mit sowohl einer Rollkomponente als auch mit einer Nickkomponente bei einem beliebigen Fahrtweg an einer Hanglange kompensieren.

Wird die Neigung des Scheibenstreuers sowohl um eine erste horizontale Achse als auch um eine zweite horizontale Achse ermittelt und an das Regelgerät übermittelt, so kann der wenigstens eine funktionale Zusammenhang zwischen dem Drehmoment (M) und dem auf die Verteilerscheibe auftreffenden Massenstrom (m) an Streugut beispielsweise von der allgemeinen Formel

$$M = \dot{m} \cdot \omega \left\{ R^2 - 0{,}5 \cdot \left[ (r_{0x} + h \cdot \tan(\alpha))^2 + (r_{0y} + h \cdot \tan(\beta))^2 \right] \right\} \cdot K_S$$

abgeleitet sein, wobei es sich bei

- bei $M$ um das - sensorisch ermittelte - Drehmoment der Verteilerscheibe,
- bei $m$ um den auf die Verteilerscheibe auftreffenden Massenstrom an Streugut, d.h. um den Ist-Massenstrom an Streugut ($\dot{m}_{ist}$),
- bei $\omega$ um einen von der Drehzahl (n) der Verteilerscheibe abhängigen Faktor, wobei $\omega$ insbesondere durch $\omega = 2\pi \cdot n$ definiert sein und folglich die Einheit $s^{-1}$ besitzen kann,
- bei $R$ um den größten Radius der mit der wenigstens einen Wurfschaufel versehenen Verteilerscheibe, also insbesondere um den Abstand vom Drehzentrum der Verteilerscheibe bis zu dem radial äußeren Ende der (längsten) Wurfschaufel der Verteilerscheibe,
- bei $r_{0x}$ um die Erstreckungskomponente des Aufgaberadius' ($r_0$) des Streugutes auf die Verteilerscheibe senkrecht zu der ersten horizontalen Achse (x),
- bei $r_{0y}$ um die Erstreckungskomponente des Aufgaberadius' ($r_0$) des Streugutes auf die Verteilerscheibe senkrecht zu der zweiten horizontalen Achse (y),
- bei $h$ um den Abstand einer oberhalb der Verteilerscheibe angeordneten Dosieröffnung des Scheibenstreuers von der mit der wenigstens einen Wurfschaufel versehenen Verteilerscheibe,
- bei $\alpha$ um die Neigung - oder genauer: um den Neigungswinkel - des Scheibenstreuers um die erste horizontale Achse, so dass im Falle einer Neigung des Scheibenstreuers um die erste horizontale Achse (x) der Term $h \cdot \tan(\alpha)$ der hierdurch verursachten Verlagerung $\Delta r_x$ des Aufgabepunktes senkrecht zu der ersten horizontalen Achse (x) entspricht,
- bei $\beta$ um die Neigung - oder genauer: um den Neigungswinkel - des Scheibenstreuers um die zweite horizontale Achse, so dass im Falle einer Neigung des Scheibenstreuers um die zweite horizontale Achse (y) der Term $h \cdot \tan(\beta)$ der hierdurch verursachten Verlagerung $\Delta r_y$ des Aufgabepunktes senkrecht zu der zweiten horizontalen Achse (y) entspricht, und
- bei $K_s$ um einen von der Geometrie der Verteilerscheibe und/oder deren wenigstens einer Wurfschaufel abhängigen, insbesondere dimensionslosen, Faktor

handelt.

In weiterhin vorteilhafter Ausgestaltung kann vorgesehen sein, dass ferner die Drehzahl der Verteilerscheibe oder wenigstens einer Welle im Antriebsstrang derselben

- sensorisch, z.B. mittels eines Drehzahlsensor, ermittelt und an das Regelgerät übermittelt wird oder
- mittels einer Eingabeeinrichtung in das Regelgerät eingegeben wird,

wobei die für die Öffnungsstellung des Dosierorgans repräsentative Stellgröße ferner in Abhängigkeit der Drehzahl der Verteilerscheibe oder der Welle im Antriebsstrang derselben generiert wird. Eine solche Massenstromregelung erlaubt folglich einerseits einen in aller Regel mit Drehzahlschwankungen verbundenen mechanischen Antrieb der Verteilerscheibe(n) mittels der Zapfwelle einer Zugmaschine, wie eines Traktors, andererseits eine gewünschte Veränderung der Drehzahl der Verteilerscheibe(n) - sei es automatisch zur Einstellung bzw. Aufrechterhaltung bestimmter Streubilder oder sei es durch Eingabe einer Soll-Drehzahl in die Eingabeeinrichtung des Regelgerätes -, wobei der drehzahlbedingten Änderung des Drehmomentes der Verteilerscheibe der Massenstromregelung Rechnung getragen werden kann.

In diesem Zusammenhang kann beispielsweise vorgesehen sein, dass der wenigstens eine funktionale Zusammenhang zwischen dem Drehmoment und dem auf die Verteilerscheibe auftreffenden Massenstrom an Streugut wenigstens einen drehzahlabhängigen Faktor aufweist, wie z.B. den oben erläuterten Faktor $\omega$, in welchen die aktuelle Drehzahl der Verteilerscheibe direkt eingeht, um die für die Öffnungsstellung des Dosierorgans repräsentative Stellgröße unter Berücksichtigung der Drehzahl der wenigstens einen Verteilerscheibe des Scheibenstreuers zu generieren. Alternativ oder zusätzlich kann beispielsweise für eine Mehrzahl an Drehzahlen oder Drehzahlbereichen der Verteilerscheibe eine Mehrzahl an funktionalen Zusammenhängen zwischen dem Drehmoment und dem auf die Verteilerscheibe auftreffenden Massenstrom an Streugut in dem Regelgerät oder in der diesem zugeordneten Speichereinrichtung abgespeichert sein (also z.B. eine Mehrzahl an von der obigen Gleichung abgeleiteten funktionalen Zusammenhängen mit verschiedenen, fest vorgegebenen drehzahlabhängigen Faktoren, wobei der jeweilige funktionale Zusammenhang in Abhängigkeit von der jeweils aktuellen Drehzahl bzw. von dem jeweils aktuellen Drehzahlbereich der Verteilerscheibe von dem Regelgerät ausgewählt wird), um die für die Öffnungsstellung des Dosierorgans repräsentative Stellgröße unter Berücksichtigung der Drehzahl der wenigstens einen Verteilerscheibe des Scheibenstreuers zu generieren. Darüber hinaus kann alternativ oder zusätzlich beispielsweise vorgesehen sein, dass für eine Mehrzahl an Drehzahlen oder Drehzahlbereichen der Verteilerscheibe wenigstens ein Korrekturfaktor in dem Regelgerät oder in der diesem zugeordneten Speichereinrichtung abgespeichert ist, um welchen der wenigstens eine funktionale Zusammenhang zwischen dem Drehmoment und dem auf die Verteilerscheibe auftreffenden Massenstrom an Streugut bei der jeweiligen Drehzahl oder in dem jeweiligen Drehzahlbereich korrigiert wird (der funktionale Zusammenhang wird also von dem Regelgerät um einen von der jeweils aktuellen Drehzahl bzw. von dem jeweils aktuellen Drehzahlbereich der Verteilerscheibe abhängigen, abgespeicherten Faktor korrigiert), um die für die Öffnungsstellung des Dosierorgans repräsentative Stellgröße unter Berücksichtigung der Drehzahl der wenigstens einen Verteilerscheibe des Scheibenstreuers zu generieren. Selbstverständlich kann hierbei auch eine Mehrzahl an funktionalen Abhängigkeiten zwischen dem Drehmoment und dem auf die Verteilerscheibe auftreffenden Massenstrom an Streugut und/oder eine Mehrzahl an Korrekturfaktoren für eine Mehrzahl an verschiedenen Drehzahl(bereich)en der Verteilerscheibe hinterlegt sein.

In ähnlicher Weise kann alternativ oder zusätzlich beispielsweise vorgesehen sein, dass für eine Mehrzahl an Massenströmen oder Massenstrombereichen an Streugut

- eine Mehrzahl an funktionalen Zusammenhängen zwischen dem Drehmoment und dem jeweiligen auf die Verteilerscheibe auftreffenden Massenstrom oder Massenstrombereich an Streugut in dem Regelgerät oder in der diesem zugeordneten Speichereinrichtung abgespeichert sind, oder
- wenigstens ein Korrekturfaktor in dem Regelgerät oder in der diesem zugeordneten Speichereinrichtung abgespeichert ist, um welchen der wenigstens eine funktionale Zusammenhang zwischen dem Drehmoment und dem auf die Verteilerscheibe auftreffenden Massenstrom an Streugut bei dem jeweiligen Massenstrom oder Massenstrombereich an Streugut korrigiert wird,

um die für die Öffnungsstellung des Dosierorgans repräsentative Stellgröße in Abhängigkeit des auf die wenigstens eine Verteilerscheibe des Scheibenstreuers auftreffenden Massenstromes an Streugut zu generieren. Auf diese Weise lassen sich auch bei sehr geringen oder sehr großen Massenströmen an Streugut Dosierfehler vermeiden, sofern der wenigstens eine funktionale Zusammenhang zwischen dem Drehmoment und dem auf die Verteilerscheibe auftreffenden Massenstrom an Streugut nicht mit einer hinreichenden Genauigkeit auf alle mit dem jeweiligen Dosierorgan dosierbaren Massenströme an Verteilgut anwendbar sein sollte.

Wie bereits angedeutet, hat es sich in der Praxis bewährt, für verschiedene Streu- bzw. Arbeitsbreiten(intervalle) verschiedene Verteilerscheibensätze und/oder mit verschiedenen Wurfschaufeln versehene Verteilerscheiben einzusetzen, da es für die Qualität des Streuergebnisses bei mit umlaufenden Verteilerscheiben ausgerüsteten, gattungsgemäßen Scheibenstreuern auf eine möglichst gleichmäßige Verteilung des Streugutes auf dem Boden ankommt, wie beispielsweise der zu bestreuenden Fläche eines Feldes, was mittels ein und derselben Verteilerscheibe für sehr unterschiedliche Streu- bzw. Arbeitsbreiten nicht oder nur bedingt zu bewerkstelligen ist. Weil die Geometrie der jeweiligen Verteilerscheibe und auch der jeweiligen Wurfschaufel(n) einen Einfluss auf das Drehmoment der Verteilerscheibe besitzt - so bewirkt ein größerer Radius beispielsweise in höheres Drehmoment und umgekehrt -, kann in weiterhin vorteilhafter Ausgestaltung vorgesehen sein, dass der wenigstens eine funktionale Zusammenhang zwischen dem Drehmoment und dem auf die Verteilerscheibe auftreffenden Massenstrom an Streugut wenigstens einen von der Geometrie der Verteilerscheibe und/oder von deren wenigstens einer Wurfschaufel abhängigen Faktor aufweist, wie beispielsweise den oben erläuterten Faktor $K_S$, welcher die Geometrie der aktuell verwendeten Verteilerscheibe und/oder deren Wurfschaufel(n) berücksichtigt, um die für die Öffnungsstellung des Dosierorgans repräsentative Stellgröße in Abhängigkeit der Geometrie einer jeweiligen Verteilerscheibe und/oder einer jeweiligen Wurfschaufel einer jeweiligen Verteilerscheibe des Scheibenstreuers zu generieren. Alternativ oder zusätzlich kann beispielsweise vorgesehen sein, dass für eine Mehrzahl an verschiedenen Verteilerscheiben und/oder für eine Mehrzahl an mit verschiedenen Wurfschaufeln versehenen Verteilerscheiben eine Mehrzahl an funktionalen Zusammenhängen zwischen dem Drehmoment und dem auf die jeweilige Verteilerscheibe auftreffenden Massenstrom an Streugut in dem Regelgerät oder in der diesem zugeordneten Speichereinrichtung abgespeichert sind (also beispielsweise eine Mehrzahl an von der obigen Gleichung abgeleiteten funktionalen Zusammenhängen mit verschiedenen, fest vorgegebenen scheiben- und/oder wurfschaufelabhängigen Faktoren, wobei der jeweilige funktionale Zusammenhang in Abhängigkeit von der jeweils verwendeten Verteilerscheibe und/oder deren Wurfschaufel(n) von dem Regelgerät ausgewählt wird), um die für die Öffnungsstellung des Dosierorgans repräsentative Stellgröße in Abhängigkeit der Geometrie einer jeweiligen Verteilerscheibe und/oder einer jeweiligen Wurfschaufel einer jeweiligen Verteilerscheibe des Scheibenstreuers zu generieren. Darüber hinaus kann alternativ oder zusätzlich beispielsweise vorgesehen sein, dass wenigstens ein Korrekturfaktor in dem Regelgerät oder in der diesem zugeordneten Speichereinrichtung abgespeichert ist, mit welchem wenigstens ein erster funktionaler Zusammenhang zwischen dem Drehmoment und dem auf eine erste Verteilerscheibe auftreffenden Massenstrom an Streugut in wenigstens einen zweiten funktionalen Zusammenhang zwischen dem Drehmoment und dem auf eine zweite Verteilerscheibe auftreffenden Massenstrom an Streugut umgerechnet wird (der funktionale Zusammenhang wird also von dem Regelgerät um einen von der jeweils verwendeten Verteilerscheibe und/oder deren Wurfschaufel(n) abhängigen, abgespeicherten Faktor korrigiert), um die für die Öffnungsstellung des Dosierorgans repräsentative Stellgröße in Abhängigkeit der Geometrie einer jeweiligen Verteilerscheibe und/oder einer jeweiligen Wurfschaufel einer jeweiligen Verteilerscheibe des Scheibenstreuers zu generieren. Sofern die Verteilerscheibe(n) des Scheibenstreuers mit verstellbaren Wurfschaufeln ausgestattet ist bzw. sind, gilt entsprechendes für verschiedene Einstellungen der Wurfschaufeln, welche gleichfalls auf das Drehmoment Einfluss nehmen können.

In diesem Zusammenhang kann eine für die jeweilige Verteilerscheibe bzw. Wurfschaufel repräsentative Information, welche an das Regelgerät übermittelt werden muss, um dem Regelgerät "mitzuteilen", mit welcher Verteilerscheibe/Wurfschaufel der Scheibenstreuer gerade bestückt ist, um den entsprechenden funktionalen Zusammenhang zwischen dem Drehmoment und dem auf die jeweilige Verteilerscheibe auftreffenden Massenstrom an Streugut oder den jeweiligen Korrekturfaktor auswählen zu können, beispielsweise in eine dem Regelgerät zugeordnete Eingabeeinrichtung, z.B. manuell, eingegeben werden. Alternativ ist es denkbar, dass eine solche, für die jeweilige Verteilerscheibe/Wurfschaufel repräsentative Information in Abhängigkeit eines einer jeweiligen Verteilerscheibe/Wurfschaufel zugeordneten, sensorisch erfassten Codes generiert wird, welcher an das Regelgerät übermittelt wird. Hierfür kommen beispielsweise RFID-Transponder in Betracht, auf welchen ein eine jeweilige Verteilerscheibe/Wurfschaufel identifizierender Code abgespeichert ist, welcher mittels eines mit dem Regelgerät in Wirkverbindung stehenden RFID-Lesegerätes ausgelesen wird, aber auch beliebige andere bekannte Erfassungseinrichtungen einschließlich Sensoren, Kameras und dergleichen.

Eine die aktuell verwendete Verteilerscheibe und/oder Wurfschaufel identifizierende Information - sowie auch alle anderen Parameter, wie der (aktuelle) Massenstrom, die (aktuelle) Arbeitsbreite, die (aktuelle) Fahrgeschwindigkeit, die (aktuelle) Drehzahl der Verteilerscheibe(n), der (aktuelle) Aufgabepunkt des Streugutes auf die (jeweilige) Verteilerscheibe etc. - kann dem Bediener z.B. auf einer mit dem Regelgerät in Wirkverbindung stehenden Anzeigeeinrichtung angezeigt werden, um dem Bediener die jeweils eingegebene oder auch sensorisch erfasste Verteilerscheibe bzw. Wurfschaufel sowie vorzugsweise auch zumindest einige der vorgenannten Parameter anzuzeigen. Entsprechendes gilt für weitere Parameter, wie z.B. für die Umgebungsbedingungen relevante Parameter, beispielsweise Windstärke und -richtung, Luftfeuchtigkeit, Soll-Streumenge pro Fläche, z.B. anhand einer elektronischen Feldkarte, etc.

Sofern der Scheibenstreuer über eine Einrichtung zur Verstellung des Aufgabepunktes des Streugutes auf die Verteilerscheibe(n) verfügt, so berücksichtigt der wenigstens eine funktionale Zusammenhang zwischen dem Drehmoment und dem auf die (jeweilige) Verteilerscheibe auftreffenden Massenstrom ($\dot{m}$) an Streugut ferner zweckmäßigerweise den mittels einer solchen Aufgabepunkt-Verstelleinrichtung des Scheibenstreuers veränderbaren, aktuellen Aufgabepunkt des Streugutes auf die Verteilerscheibe, insbesondere in Form des für das Drehmoment maßgeblichen, aktuellen Aufgaberadius' des Streugutes auf die Verteilerscheibe bzw. dessen Erstreckungskomponenten senkrecht zu den jeweiligen horizontalen Achsen, gegenüber welchen die Neigung des Scheibenstreuers berücksichtigt wird. Die Aufgabepunkt-Verstelleinrichtung kann grundsätzlich zu einer beliebigen - umfänglichen und/oder radialen - Verstellung des Aufgabepunktes auf die Verteilerscheibe ausgebildet sein, wobei sie vorzugsweise den Aufgabepunkt ausschließlich in Umfangsrichtung der Verteilerscheibe konzentrisch zu deren Drehachse verstellt, um das Streubild insgesamt nicht zu verändern. Obwohl in diesem Fall der Betrag des Aufgaberadius' bzw. der Betrag des Abstandes des Aufgabepunktes vom Drehzentrum der Verteilerscheibe (bei horizontaler Ausrichtung des Scheibenstreuers) stets konstant ist, erweist sich die Berücksichtigung des aktuellen Aufgaberadius' als Vektor oder in Form von Ortskoordinaten auf der Scheibenoberfläche gleichwohl als vorteilhaft, um insbesondere die Erstreckungskomponenten des Aufgaberadius' jeweils senkrecht zu der oder den horizontalen Achsen zu berücksichtigen, zu welchen sich jeweils die neigungsbedingte Verlagerungskomponente des Aufgabepunktes $h \cdot \tan(\alpha)$ bzw. $h \cdot \tan(\beta)$ (siehe oben) addiert, wenn der Scheibenstreuer um die jeweilige horizontale Achse geneigt wird.

Wie als solches aus dem Stand der Technik bekannt, ist es mittels des erfindungsgemäßen Verfahren selbstverständlich möglich, dass das für den Ist-Massenstrom repräsentative Drehmoment der wenigstens einen Welle in dem Antriebsstrang der Verteilerscheibe dadurch sensorisch ermittelt wird, indem

- die Torsion wenigstens einer Welle in einem Antriebsstrang der Verteilerscheibe; und/oder
- die Druckdifferenz eines zum Antrieb der Verteilerscheibe dienenden Hydromotors; und/oder
- die Stromaufnahme und/oder Spannungsabfall eines zum Antrieb der Verteilerscheibe dienenden Elektromotors sensorisch

ermittelt wird. Die Ermittlung der (aktuellen) Neigung des Scheibenstreuers um die wenigstens eine bzw. vorzugsweise um die wenigstens zwei horizontale(n) Achse(n) geschieht vorteilhafterweise gleichfalls sensorisch, wie beispielsweise mittels wenigstens eines Neigungssensors.

Wie ebenfalls als solches bekannt, hat es sich für die erfindungsgemäße Massenstromregelung des Dosierorgans als zweckmäßig erwiesen, dass das für den Ist-Massenstrom repräsentative Drehmoment einerseits, insbesondere in periodischen Zeitabständen, im Leerlauf bei geschlossenem Dosierorgan und folglich unbelasteter Verteilerscheibe, andererseits bei Belastung der Verteilerscheibe mit dem Ist-Massenstrom sensorisch ermittelt wird, wobei der im Leerlauf ermittelte Wert von dem unter Last ermittelten Gesamtwert subtrahiert wird, um den nur durch den Ist-Massenstrom des Streugutes bewirkten Differenzwert zu ermitteln, wobei dieser Differenzwert als die für den Ist-Massenstrom repräsentative Regelgröße verwendet wird, um hieraus die für die Öffnungsstellung des Dosierorgans repräsentative Stellgröße zu generieren und das Dosierorgan auf den Soll-Massenstrom nachzuregeln. Das Leerlaufdrehmoment, welches beispielsweise aufgrund temperaturbedingter Änderungen der Viskosität der für die Lagerung der Wellen im Antriebsstrang der Verteilerscheibe(n) verwendeten Schmiermittel nicht unerheblichen Schwankungen unterworfen sein kann, wird folglich durch die genannte Differenzwertbildung von Lastdrehmoment und Leerlaufdrehmoment eliminiert, um die Messgenauigkeit und folglich die Genauigkeit der Stellgröße des Dosierorgans, welche anhand der sensorisch erfassten Last- bzw. Leerlaufdrehmomente generiert wird, zu erhöhen.

Das erfindungsgemäße Verfahren bietet sich sowohl für Einscheibenstreuer als auch insbesondere für Zwei- oder Mehrscheibenstreuer an, wobei im letztgenannten Fall vorzugsweise der Ist-Massenstrom eines jeden Dosierorgans unabhängig voneinander geregelt werden kann. Demgemäß kann in vorteilhafter Ausgestaltung vorgesehen sein, dass zur Regelung des Ist-Massenstromes an Streugut wenigstens zwei regelbarer Dosierorgane eines Mehrscheibenstreuers, insbesondere eines Zweischeibenstreuers, mit jeweils einer, einem jeweiligen Dosierorgan zugeordneten und mit wenigstens einer Wurfschaufel versehenen Verteilerscheibe der Soll-Massenstrom eines jeweiligen Dosierorgans dem rechnergestützten Regelgerät als Führungsgröße eingegeben wird, wobei ferner als Regelgröße das für den Ist-Massenstrom repräsentative Drehmoment je wenigstens einer Welle in einem Antriebsstrang einer jeweiligen Verteilerscheibe unabhängig voneinander sensorisch ermittelt, an das Regelgerät übermittelt und hieraus jeweils der Ist-Massenstrom anhand der wenigstens einen in dem Regelgerät oder in der diesem zugeordneten Speichereinrichtung hinterlegten funktionalen Zusammenhangs zwischen dem Drehmoment und dem auf die jeweilige Verteilerscheibe auftreffenden Massenstrom an Streugut unabhängig voneinander ermittelt wird, woraufhin die Abweichung des Ist-Massenstromes an Streugut von dem Soll-Massenstrom an Streugut für jedes Dosierorgan ermittelt und je eine für die Öffnungsstellung des jeweiligen Dosierorgans repräsentative Stellgröße generiert wird, um das jeweilige Dosierorgan auf den Soll-Massenstrom nachzuregeln, wobei der in dem Regelgerät oder in der diesem zugeordneten Speichereinrichtung hinterlegte funktionale Zusammenhang zwischen dem Drehmoment und dem auf die jeweilige Verteilerscheibe auftreffenden Massenstrom an Streugut in Abhängigkeit der Neigung des Scheibenstreuers um die wenigstens eine horizontale Achse modifiziert wird, um die für die Öffnungsstellung des jeweiligen Dosierorgans repräsentative Stellgröße unter Berücksichtigung der Neigung des Scheibenstreuers zu generieren.

Wie bereits erwähnt, bietet es sich selbstverständlich auch im Falle eines Zwei- oder Mehrscheibenstreuers vorteilhafterweise an, dass die Neigung des Scheibenstreuers sowohl um wenigstens eine erste, sich insbesondere im Wesentlichen in Fahrtrichtung erstreckende horizontale Achse als auch um wenigstens eine zweite, sich insbesondere im Wesentlichen senkrecht zur Fahrtrichtung erstreckende horizontale Achse ermittelt und an das Regelgerät übermittelt wird, und dass der wenigstens eine funktionale Zusammenhang zwischen dem Drehmoment und dem auf die jeweilige Verteilerscheibe auftreffenden Massenstrom an Streugut unabhängig voneinander in Abhängigkeit sowohl der Neigung des Scheibenstreuers um die erste horizontale Achse als auch um die zweite horizontale Achse modifiziert wird, um die für die Öffnungsstellung des Dosierorgans repräsentative Stellgröße unter Berücksichtigung der Neigung des Scheibenstreuers sowohl um die erste als auch um die zweite horizontale Achse zu generieren, so dass beliebige Neigungen des Scheibenstreuers in Bezug auf die Horizontalebene kompensiert werden können.

Wird die Neigung des Zwei- oder Mehrscheibenstreuers sowohl um die erste horizontale Achse (z.B. etwa parallel zur Fahrtrichtung) auch um eine zweite horizontale Achse (z.B. etwa senkrecht zur Fahrtrichtung) ermittelt und an das Regelgerät übermittelt, so kann der wenigstens eine funktionale Zusammenhang zwischen dem Drehmoment (M) und dem auf die eine Verteilerscheibe auftreffenden Massenstrom ($\dot{m}$) an Streugut für das der einen Verteilerscheibe zugeordnete Dosierorgan von der allgemeinen Formel

$$M = \dot{m} \cdot \omega \left\{ R^2 - 0{,}5 \cdot \left[ (r_{0x} + h \cdot \tan(\alpha))^2 + (r_{0y} + h \cdot \tan(\beta))^2 \right] \right\} \cdot K_S$$

abgeleitet sein, während der wenigstens eine funktionale Zusammenhang zwischen dem Drehmoment (M) und dem auf die andere Verteilerscheibe auftreffenden Massenstrom (m) an Streugut für das der anderen Verteilerscheibe zugeordnete Dosierorgan von der allgemeinen Formel

$$M = \dot{m} \cdot \omega \, \{R^2 - 0{,}5 \cdot [(r_{0x} - h \cdot \tan(\alpha))^2 + (r_{0y} + h \cdot \tan(\beta))^2]\} \cdot K_S$$

abgeleitet sein kann, wobei es sich

- bei M um das - sensorisch ermittelte - Drehmoment der jeweiligen Verteilerscheibe,
- bei m um den auf die jeweilige Verteilerscheibe auftreffenden Massenstrom an Streugut, d.h. um den jeweiligen Ist-Massenstrom an Streugut ($\dot{m}_{ist}$),
- bei $\omega$ um einen von der Drehzahl (n) der jeweiligen Verteilerscheibe abhängigen Faktor, wobei $\omega$ insbesondere jeweils durch $\omega = 2\pi \cdot n$ definiert sein und folglich die Einheit $s^{-1}$ besitzen kann,
- bei R um den größten Radius der jeweiligen, mit der wenigstens einen Wurfschaufel versehenen Verteilerscheibe, also insbesondere um den Abstand vom Drehzentrum der Verteilerscheibe bis zu dem radial äußeren Ende der (längsten) Wurfschaufel der jeweiligen Verteilerscheibe,
- bei $r_{0x}$ um die Erstreckungskomponente des Aufgaberadius' ($r_0$) des Streugutes auf die jeweilige Verteilerscheibe senkrecht zu der im Wesentlichen parallel zur Fahrtrichtung angeordneten ersten horizontalen Achse (x),
- bei $r_{0y}$ um die Erstreckungskomponente des Aufgaberadius' ($r_0$) des Streugutes auf die Verteilerscheibe senkrecht zu der im Wesentlichen senkrecht zur Fahrtrichtung angeordneten zweiten horizontalen Achse (y),
- bei h um den Abstand einer oberhalb der Verteilerscheibe angeordneten Dosieröffnung des Scheibenstreuers von der jeweiligen, mit der wenigstens einen Wurfschaufel versehenen Verteilerscheibe,
- bei $\alpha$ um die Neigung - oder genauer: um den Neigungswinkel - des Scheibenstreuers um die im Wesentlichen parallel zur Fahrtrichtung angeordnete erste horizontale Achse, so dass im Falle einer Neigung des Scheibenstreuers um die erste horizontale Achse (x) der Term h · tan ($\alpha$) der hierdurch verursachten Verlagerung $\Delta r_x$ des Aufgabepunktes senkrecht zu der ersten horizontalen Achse (x) entspricht,
- bei $\beta$ um die Neigung - oder genauer: um den Neigungswinkel - des Scheibenstreuers um die im Wesentlichen senkrecht zur Fahrtrichtung angeordnete zweite horizontale Achse, so dass im Falle einer Neigung des Scheibenstreuers um die zweite horizontale Achse (y) der Term h · tan ($\beta$) der hierdurch verursachten Verlagerung $\Delta r_y$ des Aufgabepunktes senkrecht zu der zweiten horizontalen Achse (y) entspricht, und
- bei $K_S$ um einen von der Geometrie der jeweiligen Verteilerscheibe und/oder deren wenigstens einer Wurfschaufel abhängigen, insbesondere dimensionslosen, Faktor

handelt.

Die für das der linken Verteilerscheibe zugeordnete Dosierorgan und für das der rechten Verteilerscheibe zugeordnete Dosierorgan in Bezug auf das Vorzeichen des Korrekturfaktors

$$\Delta r_x = h \cdot \tan(\alpha)$$

unterschiedlichen funktionalen Zusammenhänge des Massenstromes von dem Drehmoment tragen dem Umstand Rechnung, dass

- bei einer Neigung des Zweischeibenstreuers um die sich im Wesentlichen parallel zur Fahrtrichtung erstreckende erste horizontale Achse (x) (z.B. bei der Fahrt entlang einer Höhenlinie schräg zu einem Hang, welcher einen Neigungswinkel $\alpha$ in Bezug auf die Horizontale aufweist) der Aufgabepunkt der dem Hang abgewandten (z.B. linken) Verteilerscheibe in dieselbe Richtung, nämlich hangabwärts nach links, verlagert wird wie der Aufgabepunkt der dem Hang zugewandten (z.B. rechten) Verteilerscheibe, d.h. der Aufgabepunkt auf beide Verteilerscheiben wird jeweils um den Abstand $\Delta r_x = h \cdot \tan(\alpha)$ hangabwärts (hier: nach links), also senkrecht zu der ersten, parallel zur Fahrtrichtung angeordneten horizontalen Achse (x) verlagert, so dass aufgrund der im Normalbetrieb üblicherweise in Bezug auf die Längsachse des Zweischeibenstreuers etwa spiegelsymmetrischen Aufgabepunkte auf beide Verteilerscheiben der tatsächliche Aufgaberadius der einen Verteilerscheibe um den Abstand $\Delta r_x$ vergrößert und jener der anderen Verteilerscheibe um den Abstand $\Delta r_x$ verkleinert wird, was eine entgegengesetzte Korrektur des funktionalen Zusammenhangs zwischen dem Drehmoment und dem Massenstrom erfordert; wohingegen
- bei einer Neigung des Zweischeibenstreuers um die sich im Wesentlichen senkrecht zur Fahrtrichtung erstreckende zweite horizontale Achse (y) (z.B. bei der Fahrt senkrecht zu einer Höhenlinie bergauf oder bergab eines Hangs, welcher einen Neigungswinkel $\beta$ in Bezug auf die Horizontale aufweist) der Aufgabepunkt der einen (z.B. linken) Verteilerscheibe zwar ebenfalls in dieselbe Richtung, nämlich hangauf- oder abwärts nach hinten oder vorne, verlagert wird wie der Aufgabepunkt der anderen (z.B. rechten) Verteilerscheibe, d.h. der Aufgabepunkt auf beide Verteilerscheiben wird jeweils um den Abstand $\Delta r_y = h \cdot \tan(\beta)$ nach hinten oder vorne, also senkrecht zu der zweiten, parallel zur Fahrtrichtung angeordneten horizontalen Achse (y) verlagert, doch werden in diesem Fall aufgrund der im Normalbetrieb üblicherweise in Bezug auf die Längsachse des Zweischeibenstreuers etwa spiegelsymmetrischen Aufgabepunkte auf beide Verteilerscheiben die tatsächlichen Aufgaberadien beider Verteilerscheiben um den Abstand $\Delta r_y$ in gleichem Maße verkleinert oder vergrößert, was eine gleichsinnige Korrektur des funktionalen Zusammenhangs zwischen dem Drehmoment und dem Massenstrom erfordert.

Bei einem erfindungsgemäßen Scheibenstreuer kann es folglich sowohl um einen Einscheibenstreuer als auch vorzugsweise um einen Mehrscheibenstreuer, insbesondere um einen Zweischeibenstreuer, handeln.

Weitere Merkmale und Vorteile der Erfindung ergeben sich aus der nachfolgenden Beschreibung eines Ausführungsbeispiels unter Bezugnahme auf die Zeichnungen. Dabei zeigen:

Fig. 1    eine stark schematisierte Seitenansicht eines Zweischeibenstreuers bei der Fahrt hangaufwärts eines Hangs, welcher einen Neigungswinkel $\beta$ besitzt;

Fig. 2    eine stark schematisierte Rückansicht des Zweischeibenstreuers gemäß Fig. 1 bei der Fahrt entlang einer Höhenlinie schräg zu einem Hang, welcher einen Neigungswinkel $\alpha$ besitzt; und

Fig. 3    eine stark schematisierte Draufsicht auf eine der Verteilerscheiben des Scheibenstreuers gemäß Fig. 1 und 2 zur Veranschaulichung der Verlagerung des Aufgabepunktes des Streugutes auf die Verteilerscheibe infolge der Hangneigung.

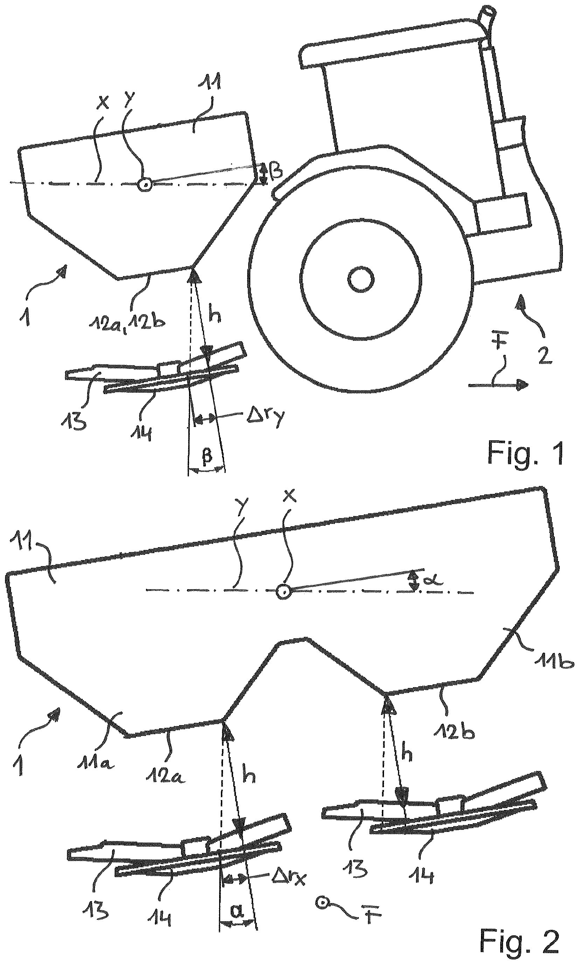

In den Fig. 1 und 2 ist eine Ausführungsform eines Zweischeibenstreuers 1 schematisch wiedergegeben, welcher im vorliegenden Fall in Form eines Anbaugerätes ausgebildet und von dem Dreipunkt-Kraftheber (nicht gezeigt) eines in Fig. 1 abgebrochen dargestellten Traktors 2 aufgenommen ist. Der Zweischeibenstreuer 2 weist in üblicher Weise einen Vorratsbehälter 11 für pulver- bzw. partikelförmiges Streugut, z.B. Mineraldünger, auf, welcher zwei sich etwa trichterförmig nach unten verjüngende Behälterteile 11a, 11b umfasst (vgl. insbesondere die Fig. 1). Am Boden 12a, 12b eines jeweiligen Behälterteils 11a, 11b des Vorratsbehälters 11 befindet sich je eine (zeichnerisch nicht dargestellte) Dosieröffnung je eines (ebenfalls nicht zeichnerisch dargestellten) Dosierorgans, wobei die unabhängig voneinander betätigbaren Dosierorgane beispielsweise je einen mit der Dosieröffnung zusammenwirkenden Dosierschieber umfassen. Wie ebenfalls aus dem Stand der Technik bekannt, kann letzterer mittels eines geeigneten Stellorgans, wie einer elektrischen oder hydraulischen Kolben-/Zylindereinheit, einem Servomotor oder dergleichen, betätigt sein, welches mit einem Regelgerät in Wirkverbindung steht und von diesem mit einer für die Öffnungsstellung des Dosierorgans repräsentativen Stellgröße beaufschlagt wird, um den der jeweiligen Applikationsmenge an Streugut bzw. der Soll-Streumenge pro Flächeneinheit, z.B. gemäß einer elektronischen Feldkarte, entsprechenden Soll-Massenstrom an Streugut, welcher unter anderem von der Fahrgeschwindigkeit und der Arbeitsbreite abhängt, ausbringen zu können. Unter einem Abstand h unterhalb der Dosieröffnung eines jeweiligen Dosierorgans ist je eine mit Wurfschaufeln 13 versehene Verteilerscheibe 14 - üblicherweise gegensinnig - drehangetrieben gelagert, so dass das aus einem jeweiligen Dosierorgan austretende Streugut auf die jeweilige Verteilerscheibe 14 fällt und von dort mittels der Wurfschaufeln 13 radial nach außen abgeschleudert wird.

Die Massenstromregelung der Dosierorgane einer jeweiligen Verteilerscheibe 14 unabhängig voneinander erfolgt derart, dass das für den Ist-Massenstrom repräsentative Drehmoment wenigstens einer Welle in einem Antriebsstrang der jeweiligen Verteilerscheibe 14 sensorisch ermittelt, an das Regelgerät übermittelt und hieraus der Ist-Massenstrom anhand wenigstens eines in dem Regelgerät oder in einer diesem zugeordneten Speichereinrichtung hinterlegten funktionalen Zusammenhangs zwischen dem Drehmoment und dem auf die Verteilerscheibe 14 auftreffenden Massenstrom an Streugut ermittelt wird, woraufhin die Abweichung des Ist-Massenstromes an Streugut von dem Soll-Massenstrom an Streugut ermittelt und die für die Öffnungsstellung des Dosierorgans aktuell repräsentative Stellgröße generiert wird. In diesem Zusammenhang sei auch auf den eingangs beschriebenen Stand der Technik verwiesen.

Das für die derartige Ermittlung des Ist-Massenstromes an Streugut hängt folglich von dem sensorisch ermittelten Drehmoment einer jeweiligen Verteilerscheibe 14 ab, welches wiederum von dem Aufgabepunkt des Streugutes auf die jeweilige Verteilerscheibe 14 abhängt und um so größer ist, je weiter radial innen das Streugut auf die jeweilige Verteilerscheibe 14 auftrifft, wohingegen es um so kleiner ist, je weiter radial außen das Streugut auf die jeweilige Verteilerscheibe 14 auftrifft. Neigt sich nun der Zweischeibenstreuer 1 um einen Winkel $\alpha$ um eine etwa parallel zur Fahrtrichtung F angeordnete erste horizontale Achse x, wie dies in der Fig. 2 bei der Fahrt entlang einer Höhenlinie eines Hangs mit der Neigung $\alpha$ der Fall ist, so verlagert sich der jeweilige Aufgabepunkt bzw. Aufgaberadius des Streugutes auf eine jeweilige Verteilerscheibe 14 um eine neigungsbedingte Abweichung $\Delta r_x$ senkrecht zu der sich parallel zur Fahrtrichtung F erstreckenden ersten horizontalen Achse x (also in Fahrtrichtung betrachtet nach links oder auch nach rechts), wobei diese Abweichung $\Delta r_x$ dem Abstand h zwischen der jeweiligen Dosieröffnung und der jeweiligen Verteilerscheibe 14 multipliziert mit tan ($\alpha$) entspricht:

$$\Delta r_x = h \cdot \tan (\alpha)$$

Neigt sich der Zweischeibenstreuer 1 um einen Winkel $\beta$ um eine etwa senkrecht zur Fahrtrichtung F (und folglich auch senkrecht zur der ersten horizontalen Achse x) angeordnete zweite horizontale Achse y, wie dies in der Fig. 1 bei der Fahrt senkrecht zu einer Höhenlinie hangauf- oder auch hangabwärts eines Hangs mit der Neigung $\beta$ der Fall ist, so verlagert sich der jeweilige Aufgabepunkt bzw. Aufgaberadius des Streugutes auf eine jeweilige Verteilerscheibe 14 um eine neigungsbedingte Abweichung $\Delta r_y$ senkrecht zu der sich senkrecht zur Fahrtrichtung F erstreckenden zweiten horizontalen Achse y (also in Fahrtrichtung betrachtet nach hinten oder auch nach vorne), wobei diese Abweichung $\Delta r_y$ dem Abstand h zwischen der jeweiligen Dosieröffnung und der jeweiligen Verteilerscheibe 14 multipliziert mit tan ($\beta$) entspricht:

$$\Delta r_y = h \cdot \tan (\beta)$$

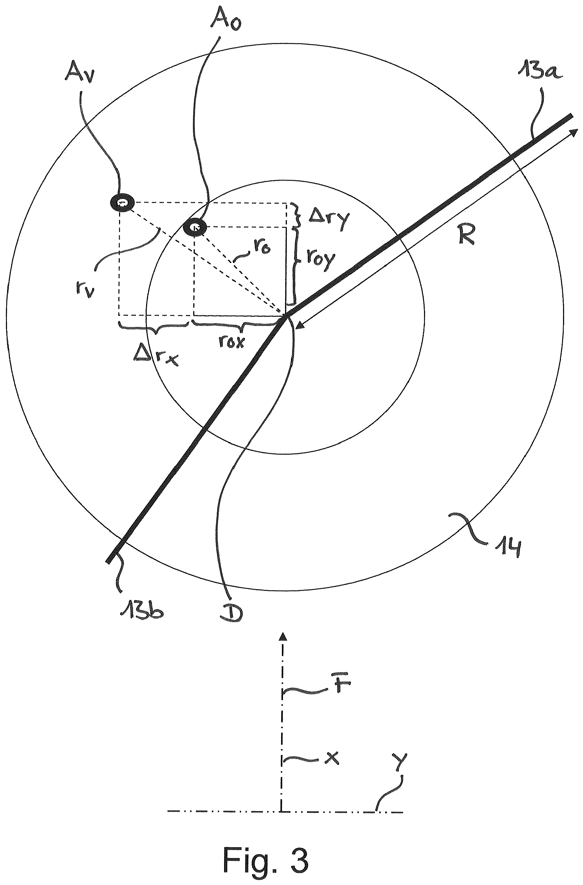

In der Fig. 3 ist zur Veranschaulichung der neigungsbedingten Verlagerung des Aufgabepunktes bzw. des Aufgaberadius' des Streugutes auf die Verteilerscheiben 14 im Falle einer Neigungskomponente des Zweischeibenstreuers 1 sowohl um die erste horizontale Achse x parallel zur Fahrtrichtung F (entsprechend der Fig. 2) als auch um die zweite horizontale Achse y senkrecht zur Fahrtrichtung F (entsprechend der Fig. 1) eine Draufsicht auf eine der Verteilerscheiben 14 des Zweischeibenstreuers 1 gemäß den Fig. 1 und 2, z.B. auf die in Fig. 2 rechte Verteilerscheibe, in stark schematisierter Weise dargestellt. Die Verteilerscheibe 14 ist im vorliegenden Fall beispielsweise mit zwei unterschiedlich langen Wurfschaufeln 13a versehen, so dass sich der größte Radius R der Verteilerscheibe 14 als ein für deren Drehmoment relevanter Parameter durch den Abstand zwischen der Drehachse D der Verteilerscheibe 14 und dem radial äußeren Ende der längeren Wurfschaufel 13a ergibt, welcher auch als "Flugkreisradius" bezeichnet wird.
In der Fig. 3 ist einerseits

- der Aufgabepunkt $A_0$ des Streugutes auf die Verteilerscheibe 14, welcher üblicherweise mittels einer (nicht gezeigten) Aufgabepunkt-Verstelleinrichtung, z.B. koaxial zur Drehachse D der Verteilerscheibe 14, individuell eingestellt werden kann, bei horizontal ausgerichtetem Zweischeibenstreuer 1, andererseits
- ein infolge Neigung des Zweischeibenstreuers 1 sowohl um einen Winkel $\alpha$ um die sich in Fahrtrichtung F erstreckende erste horizontale Achse x als auch um einen Winkel $\beta$ um die sich senkrecht zur Fahrtrichtung F erstreckende zweite horizontale Achse y demgegenüber verlagerter Aufgabepunkt $A_V$
markiert. Man erkennt, dass sich der vorgesehene Aufgaberadius $r_0$ des Streugutes auf die Verteilerscheibe 14, welcher sowohl eine Erstreckungskomponente $r_{0x}$ senkrecht zu der ersten, im Wesentlichen parallel zur Fahrtrichtung F angeordneten horizontalen Achse x als auch eine Erstreckungskomponente $r_{0y}$ senkrecht zu der zweiten, im Wesentlichen senkrecht zur Fahrtrichtung F angeordneten horizontalen Achse y aufweist, einerseits
- aufgrund der Neigung $\alpha$ um die erste Achse x eine Abweichung $\Delta r_x$ senkrecht zu der ersten Achse x erfährt, wobei für diese Abweichung $\Delta r_x$ gilt: $\Delta r_x = h \cdot \tan (\alpha)$ (siehe oben, andererseits
- aufgrund der Neigung $\beta$ um die zweite Achse y eine Abweichung $\Delta r_y$ senkrecht zu der zweiten Achse y erfährt, wobei für diese Abweichung $\Delta r_y$ gilt: $\Delta r_y = h \cdot \tan (\beta)$ (siehe oben),

so dass sich ein veränderter Aufgaberadius $r_v$ ergibt, welcher das Drehmoment der Verteilerscheibe 14 verändert.
Während die Veränderung $\Delta r_y$, wie sie bei der Neigung um die zweite horizontale Achse y senkrecht zur Fahrtrichtung F auftritt (vgl. die Fig. 1 für die Fahrt hangauf- bzw. hangabwärts), für beide Verteilerscheiben 14 dieselbe ist (der Aufgabepunkt verlagert sich bei beiden Verteilerscheiben um $\Delta r_y$ von der Drehachse D fort radial nach außen bzw. zu der Drehachse D hin radial nach innen), ist der Betrag der Veränderung $\Delta r_x$ bei der Neigung um die erste horizontale Achse x parallel zur Fahrtrichtung F, wie sie bei der Neigung um die erste horizontale Achse x parallel zur Fahrtrichtung F auftritt (vgl. die Fig. 2 für entlang einer Höhenlinie des Hangs), zwar für beide Verteilerscheiben 14 dieselbe, doch verlagert sich der Aufgabepunkt bei der einen Verteilerscheibe 14 um $\Delta r_x$ radial nach außen (vgl. die Fig. 3 für die rechte Verteilerscheibe 14) und bei der anderen (nicht gezeigten, linken) Verteilerscheibe 14 um $\Delta r_x$ radial nach innen, was dem Umstand geschuldet ist, dass der Aufgabepunkt $A_P$ auf die linke Verteilerscheibe 14 in Bezug auf die Längsmittelachse des Zweischeibenstreuers spiegelsymmetrisch zum Aufgabepunkt $A_P$ auf die rechte Verteilerscheibe 14 gemäß der Fig. 3 angeordnet ist.
Um die für die Öffnungsstellung des einer jeweiligen Verteilerscheibe 14 zugeordneten Dosierorgans repräsentative Stellgröße unter Berücksichtigung der Neigung des Zweischeibenstreuers 1 sowohl um die Achse x parallel zur Fahrtrichtung F als auch um die Achse y senkrecht zur Fahrtrichtung F zu generieren, lässt sich der funktionale Zusammenhang zwischen dem Drehmoment und dem auf die eine (z.B. rechte) Verteilerscheibe 14 auftreffenden Massenstrom an Streugut für das dieser (z.B. rechten) Verteilerscheibe 14 zugeordnete Dosierorgan somit beispielsweise durch die Formel

$$M = \dot{m} \cdot \omega \{R^2 - 0{,}5 \cdot [(r_{0x} + h \cdot \tan(\alpha))^2 + (r_{0y} + h \cdot \tan(\beta))^2]\} \cdot K_S$$

beschreiben, während sich der funktionale Zusammenhang zwischen dem Drehmoment und dem auf die andere (z.B. linke) Verteilerscheibe 14 auftreffenden Massenstrom an Streugut für das dieser (z.B. linken) Verteilerscheibe 14 zugeordnete Dosierorgan durch die Formel

$$M = \dot{m} \cdot \omega \{R^2 - 0{,}5 \cdot [(r_{0x} - h \cdot \tan(\alpha))^2 + (r_{0y} + h \cdot \tan(\beta))^2]\} \cdot K_S$$

beschreiben lässt, wobei:

M: Drehmoment der jeweiligen Verteilerscheibe 14,
$\dot{m}$: auf die jeweilige Verteilerscheibe 14 auftreffender Massenstrom an Streugut,
$\omega$: ein von der Drehzahl (n) der jeweiligen Verteilerscheibe 14 abhängiger Faktor, wobei insbesondere $\omega = 2\pi \cdot n$,
R: größter Radius der jeweiligen Verteilerscheibe 14 bzw. deren längster Wurfschaufel 13a (vgl. die Fig. 3),
$r_{0x}$: Erstreckungskomponente des Aufgaberadius' $r_0$ des Streugutes auf die jeweilige Verteilerscheibe 14 senkrecht zu der ersten, parallel zur Fahrtrichtung F angeordneten horizontalen Achse x,
$r_{0y}$: Erstreckungskomponente des Aufgaberadius' $r_0$ des Streugutes auf die jeweilige Verteilerscheibe 14 senkrecht zu der zweiten, senkrecht zur Fahrtrichtung F angeordneten horizontalen Achse y,
h: Abstand einer oberhalb der jeweiligen Verteilerscheibe 14 angeordneten Dosieröffnung des Zweischeibenstreuers 1 von der jeweiligen Verteilerscheibe 14 bzw. deren Wurfschaufel 13 (vgl. die Fig. 1 und 2),
$\alpha$: Neigung des Zweischeibenstreuers um die erste horizontale Achse x parallel zur in Fahrtrichtung F,
$\beta$: Neigung des Zweischeibenstreuers um die zweite horizontale Achse y senkrecht zur Fahrtrichtung F, und
$K_S$: ein von der Geometrie der jeweiligen Verteilerscheibe 14 und/oder deren Wurfschaufeln 13 abhängiger Faktor.

**Patentansprüche**

1.  Verfahren zur Regelung des Ist-Massenstromes ($\dot{m}_{ist}$) an Streugut wenigstens eines regelbaren Dosierorgans eines Scheibenstreuers (1) mit wenigstens einer, dem Dosierorgan zugeordneten und mit wenigstens einer Wurfschaufel (13) versehenen Verteilerscheibe (14), wobei ein Soll-Massenstrom ($\dot{m}_{soll}$) an Streugut in Abhängigkeit wenigstens eines Parameters aus der Gruppe

    - Fahrgeschwindigkeit des Scheibenstreuers;
    - Soll-Streumenge pro Fläche; und
    - Arbeitsbreite

    ermittelt und dieser Soll-Massenstrom ($\dot{m}_{soll}$) einem rechnergestützten Regelgerät als Führungsgröße eingegeben wird, wobei ferner als Regelgröße das für den Ist-Massenstrom ($\dot{m}_{ist}$) repräsentative Drehmoment (M) wenigstens einer Welle in einem Antriebsstrang der Verteilerscheibe (14) sensorisch ermittelt, an das Regelgerät übermittelt und hieraus der Ist-Massenstrom ($\dot{m}_{ist}$) anhand wenigstens eines in dem Regelgerät oder in einer diesem zugeordneten Speichereinrichtung hinterlegten funktionalen Zusammenhangs zwischen dem Drehmoment (M) und dem auf die Verteilerscheibe (14) auftreffenden Massenstrom ($\dot{m}$) an Streugut ermittelt wird, woraufhin die Abweichung des Ist-Massenstromes ($\dot{m}_{ist}$) an Streugut von dem Soll-Massenstrom an Streugut ($\dot{m}_{soll}$) ermittelt und eine für die Öffnungsstellung des Dosierorgans repräsentative Stellgröße generiert wird, um das Dosierorgan auf den Soll-Massenstrom ($\dot{m}_{soll}$) nachzuregeln, wobei wenigstens eine Neigung des Scheibenstreuers (1) um wenigstens eine horizontale Achse (x, y) ermittelt und an das Regelgerät übermittelt wird, und der wenigstens eine in dem Regelgerät oder in der diesem zugeordneten Speichereinrichtung hinterlegte funktionale Zusammenhang zwischen dem Drehmoment (M) und dem auf die Verteilerscheibe (14) auftreffenden Massenstrom ($\dot{m}$) an Streugut in Abhängigkeit von der Neigung des Scheibenstreuers (1) um die wenigstens eine horizontale Achse (x, y) modifiziert wird, um die für die Öffnungsstellung des Dosierorgans repräsentative Stellgröße unter Berücksichtigung der Neigung des Scheibenstreuers (1) zu generieren.

2. Verfahren nach Anspruch 1, **dadurch gekennzeichnet, dass** der wenigstens eine funktionale Zusammenhang zwischen dem Drehmoment (M) und dem auf die Verteilerscheibe (14) auftreffenden Massenstrom ($\dot{m}$) an Streugut um wenigstens eine von der Neigung des Scheibenstreuers (1) abhängige Korrekturgröße ($\Delta r$) des Aufgaberadius' ($r_0$) des Streugutes auf die Verteilerscheibe (14) modifiziert wird.

3. Verfahren nach Anspruch 2, **dadurch gekennzeichnet, dass** die Korrekturgröße ($\Delta r$) des Aufgaberadius' ($r_0$) des Streugutes auf die Verteilerscheibe (14) von der allgemeinen Formel

$$\Delta r = h \cdot \tan (\alpha)$$

abgeleitet ist, wobei:

$\Delta r$: neigungsbedingte Abweichung des Aufgaberadius ($r_0$) auf die Verteilerscheibe (14),
h: Abstand einer oberhalb der Verteilerscheibe (14) angeordneten Dosieröffnung des Scheibenstreuers (1) von der mit der wenigstens einen Wurfschaufel (13) versehenen Verteilerscheibe (14), und
$\alpha$: Neigung des Scheibenstreuers (1) um die wenigstens eine horizontale Achse (x, y),
wobei die Korrekturgröße ($\Delta r$) insbesondere zu dem Aufgaberadius' ($r_0$) des Streugutes auf die Verteilerscheibe (14) addiert wird.

4. Verfahren nach einem der Ansprüche 1 bis 3, **dadurch gekennzeichnet, dass** der wenigstens eine funktionale Zusammenhang zwischen dem Drehmoment (M) und dem auf die Verteilerscheibe (14) auftreffenden Massenstrom ($\dot{m}$) an Streugut von der allgemeinen Formel

$$M = \dot{m} \cdot \omega \, \{R^2 - 0{,}5 \cdot [r_0 + h \cdot \tan (\alpha)]^2\} \cdot K_S$$

abgeleitet ist, wobei:

M: Drehmoment der Verteilerscheibe (14),
$\dot{m}$: auf die Verteilerscheibe (14) auftreffender Massenstrom an Streugut,
$\omega$: ein von der Drehzahl (n) der Verteilerscheibe (14) abhängiger Faktor, wobei insbesondere $\omega = 2\pi \cdot n$,
R: größter Radius der mit der wenigstens einen Wurfschaufel (13) versehenen Verteilerscheibe (14),
$r_0$: Aufgaberadius' des Streugutes auf die Verteilerscheibe (14),
h: Abstand einer oberhalb der Verteilerscheibe (14) angeordneten Dosieröffnung des Scheibenstreuers (1) von der mit der wenigstens einen Wurfschaufel (13) versehenen Verteilerscheibe (14),
$\alpha$: Neigung des Scheibenstreuers (1) um die wenigstens eine horizontale Achse (x, y), und
$K_S$: ein von der Geometrie der Verteilerscheibe (14) und/oder deren wenigstens einer Wurfschaufel (13) abhängiger Faktor.

5. Verfahren nach einem der Ansprüche 1 bis 4, **dadurch gekennzeichnet, dass** die Neigung des Scheibenstreuers (1) sowohl um wenigstens eine erste horizontale Achse (x) als auch um wenigstens eine unter einem Winkel von größer 0 in Bezug auf die erste horizontale Achse (x) angeordnete zweite horizontale Achse (y) ermittelt und an das Regelgerät übermittelt wird, und dass der wenigstens eine funktionale Zusammenhang zwischen dem Drehmoment (M) und dem auf die Verteilerscheibe (14) auftreffenden Massenstrom ($\dot{m}$) an Streugut in Abhängigkeit sowohl der Neigung des Scheibenstreuers (1) um die erste horizontale Achse (x) als auch um die zweite horizontale Achse (y) modifiziert wird, um die für die Öffnungsstellung des Dosierorgans repräsentative Stellgröße unter Berücksichtigung der Neigung des Scheibenstreuers (1) sowohl um die erste horizontale Achse (x) als auch um die zweite horizontale Achse (y) zu generieren.

6. Verfahren nach Anspruch 5, **dadurch gekennzeichnet, dass** die erste horizontale Achse (x) und die zweite horizontale Achse (y) im Wesentlichen senkrecht zueinander angeordnet sind, wobei sich insbesondere die erste horizontale Achse (x) in Fahrtrichtung (F) und die zweite horizontale Achse (y) senkrecht zur Fahrtrichtung (F) des Scheibenstreuers (1) erstrecken.

7. Verfahren nach Anspruch 5 oder 6, **dadurch gekennzeichnet, dass** der wenigstens eine funktionale Zusammenhang zwischen dem Drehmoment (M) und dem auf die Verteilerscheibe (14) auftreffenden Massenstrom (m) an Streugut von der allgemeinen Formel

$$M = \dot{m} \cdot \omega \{R^2 - 0{,}5 \cdot [(r_{0x} + h \cdot \tan (\alpha))^2 + (r_{0y} + h \cdot \tan (\beta))^2]\} \cdot K_S$$

abgeleitet ist, wobei:

M: Drehmoment der Verteilerscheibe (14),
m: auf die Verteilerscheibe (14) auftreffender Massenstrom an Streugut,
$\omega$: ein von der Drehzahl (n) der Verteilerscheibe (14) abhängiger Faktor, wobei insbesondere $\omega = 2\pi \cdot n$,
R: größter Radius der mit der wenigstens einen Wurfschaufel (13) versehenen Verteilerscheibe (14),
$r_{0x}$: Erstreckungskomponente des Aufgaberadius' ($r_0$) des Streugutes auf die Verteilerscheibe (14) senkrecht zu der ersten horizontalen Achse (x),
$r_{0y}$: Erstreckungskomponente des Aufgaberadius' ($r_0$) des Streugutes auf die Verteilerscheibe (14) senkrecht zu der zweiten horizontalen Achse (y),
h: Abstand einer oberhalb der Verteilerscheibe (14) angeordneten Dosieröffnung des Scheibenstreuers (1) von der mit der wenigstens einen Wurfschaufel (13) versehenen Verteilerscheibe (14),
$\alpha$: Neigung des Scheibenstreuers (1) um die erste horizontale Achse (x),
$\beta$: Neigung des Scheibenstreuers (1) um die zweite horizontale Achse (y), und
$K_S$: ein von der Geometrie der Verteilerscheibe (14) und/oder deren wenigstens einer Wurfschaufel (13) abhängiger Faktor.

8. Verfahren nach einem der Ansprüche 1 bis 7, **dadurch gekennzeichnet, dass** ferner die Drehzahl (n) der Verteilerscheibe (14) oder wenigstens einer Welle im Antriebsstrang derselben

 - sensorisch ermittelt und an das Regelgerät übermittelt wird oder
 - mittels einer Eingabeeinrichtung in das Regelgerät eingegeben wird,

wobei die für die Öffnungsstellung des Dosierorgans repräsentative Stellgröße ferner in Abhängigkeit der Drehzahl (n) der Verteilerscheibe (14) oder der Welle im Antriebsstrang derselben generiert wird.

9. Verfahren nach Anspruch 8, **dadurch gekennzeichnet, dass**

 - der wenigstens eine funktionale Zusammenhang zwischen dem Drehmoment (M) und dem auf die Verteilerscheibe (14) auftreffenden Massenstrom ($\dot{m}$) an Streugut wenigstens einen drehzahlabhängigen Faktor ($\omega$) aufweist, oder
 - für eine Mehrzahl an Drehzahlen (n) oder Drehzahlbereichen der Verteilerscheibe (14) eine Mehrzahl an funktionalen Zusammenhängen zwischen dem Drehmoment (M) und dem auf die Verteilerscheibe (14) auftreffenden Massenstrom ($\dot{m}$) an Streugut in dem Regelgerät oder in der diesem zugeordneten Speichereinrichtung abgespeichert sind, oder
 - für eine Mehrzahl an Drehzahlen (n) oder Drehzahlbereichen der Verteilerscheibe (14) wenigstens ein Korrekturfaktor in dem Regelgerät oder in der diesem zugeordneten Speichereinrichtung abgespeichert ist, um welchen der wenigstens eine funktionale Zusammenhang zwischen dem Drehmoment (M) und dem auf die Verteilerscheibe (14) auftreffenden Massenstrom (m) an Streugut bei der jeweiligen Drehzahl (n) oder in dem jeweiligen Drehzahlbereich korrigiert wird,

um die für die Öffnungsstellung des Dosierorgans repräsentative Stellgröße unter Berücksichtigung der Drehzahl (n) der wenigstens einen Verteilerscheibe (14) des Scheibenstreuers (1) zu generieren.

10. Verfahren nach einem der Ansprüche 1 bis 9, **dadurch gekennzeichnet, dass** für eine Mehrzahl an Massenströmen (m) oder Massenstrombereichen an Streugut

 - eine Mehrzahl an funktionalen Zusammenhängen zwischen dem Drehmoment (M) und dem jeweiligen auf die Verteilerscheibe (14) auftreffenden Massenstrom (m) oder Massenstrombereich an Streugut in dem Regelgerät oder in der diesem zugeordneten Speichereinrichtung abgespeichert sind, oder
 - wenigstens ein Korrekturfaktor in dem Regelgerät oder in der diesem zugeordneten Speichereinrichtung abgespeichert ist, um welchen der wenigstens eine funktionale Zusammenhang zwischen dem Drehmoment (M) und dem auf die Verteilerscheibe (14) auftreffenden Massenstrom ($\dot{m}$) an Streugut bei dem jeweiligen Massenstrom ($\dot{m}$) oder Massenstrombereich an Streugut korrigiert wird,

um die für die Öffnungsstellung des Dosierorgans repräsentative Stellgröße in Abhängigkeit des auf die wenigstens eine Verteilerscheibe (14) des Scheibenstreuers (1) auftreffenden Massenstromes an Streugut zu generieren.

11. Verfahren nach einem der Ansprüche 1 bis 10, **dadurch gekennzeichnet, dass**

- der wenigstens eine funktionale Zusammenhang zwischen dem Drehmoment (M) und dem auf die Verteilerscheibe (14) auftreffenden Massenstrom ($\dot{m}$) an Streugut wenigstens einen von der Geometrie der Verteilerscheibe (14) und/oder von deren wenigstens einer Wurfschaufel (13) abhängigen Faktor ($K_S$) aufweist, oder
- für eine Mehrzahl an verschiedenen Verteilerscheiben (14) und/oder für eine Mehrzahl an mit verschiedenen Wurfschaufeln (13) versehenen Verteilerscheiben (14) eine Mehrzahl an funktionalen Zusammenhängen zwischen dem Drehmoment (M) und dem auf die jeweilige Verteilerscheibe (14) auftreffenden Massenstrom ($\dot{m}$) an Streugut in dem Regelgerät oder in der diesem zugeordneten Speichereinrichtung abgespeichert sind, oder
- für eine Mehrzahl an verschiedenen Verteilerscheiben (14) und/oder für eine Mehrzahl an mit verschiedenen Wurfschaufeln (13) versehenen Verteilerscheiben (14) wenigstens ein Korrekturfaktor in dem Regelgerät oder in der diesem zugeordneten Speichereinrichtung abgespeichert ist, mit welchem wenigstens ein erster funktionaler Zusammenhang zwischen dem Drehmoment (M) und dem auf eine erste Verteilerscheibe (14) auftreffenden Massenstrom ($\dot{m}$) an Streugut in wenigstens einen zweiten funktionalen Zusammenhang zwischen dem Drehmoment (M) und dem auf eine zweite Verteilerscheibe (14) auftreffenden Massenstrom ($\dot{m}$) an Streugut umgerechnet wird,

um die für die Öffnungsstellung des Dosierorgans repräsentative Stellgröße in Abhängigkeit der Geometrie einer jeweiligen Verteilerscheibe (14) und/oder einer jeweiligen Wurfschaufel (13) einer jeweiligen Verteilerscheibe (14) des Scheibenstreuers (1) zu generieren.

12. Verfahren nach einem der Ansprüche 1 bis 11, **dadurch gekennzeichnet, dass** der wenigstens eine funktionale Zusammenhang zwischen dem Drehmoment (M) und dem auf die Verteilerscheibe (14) auftreffenden Massenstrom ($\dot{m}$) an Streugut ferner den mittels einer Aufgabepunkt-Verstelleinrichtung des Scheibenstreuers (1) veränderbaren, aktuellen Aufgabepunkt des Streugutes auf die Verteilerscheibe (14), insbesondere in Form des aktuellen Aufgaberadius' ($r_0$) des Streugutes auf die Verteilerscheibe (14), berücksichtigt.

13. Verfahren nach einem der Ansprüche 1 bis 12, **dadurch gekennzeichnet, dass**

(a) das für den Ist-Massenstrom ($\dot{m}_{ist}$) repräsentative Drehmoment (M) der wenigstens einen Welle in dem Antriebsstrang der Verteilerscheibe (14) dadurch sensorisch ermittelt wird, indem

- die Torsion wenigstens einer Welle in dem Antriebsstrang der Verteilerscheibe (14); und/oder
- die Druckdifferenz eines zum Antrieb der Verteilerscheibe (14) dienenden Hydromotors; und/oder
- die Stromaufnahme und/oder Spannungsabfall eines zum Antrieb der Verteilerscheibe (14) dienenden Elektromotors sensorisch ermittelt wird; und/oder

(b) die Neigung des Scheibenstreuers (1) um die wenigstens eine horizontale Achse (x, y) mittels wenigstens eines Neigungssensors ermittelt wird.

14. Verfahren nach einem der Ansprüche 1 bis 13, **dadurch gekennzeichnet, dass** das für den Ist-Massenstrom ($\dot{m}_{ist}$) repräsentative Drehmoment einerseits, insbesondere in periodischen Zeitabständen, im Leerlauf bei geschlossenem Dosierorgan und folglich unbelasteter Verteilerscheibe (14), andererseits bei Belastung der Verteilerscheibe (14) mit dem Ist-Massenstrom ($\dot{m}_{ist}$) sensorisch ermittelt wird, wobei der im Leerlauf ermittelte Wert von dem unter Last ermittelten Gesamtwert subtrahiert wird, um den nur durch den Ist-Massenstrom ($\dot{m}_{ist}$) des Streugutes bewirkten Differenzwert zu ermitteln, wobei dieser Differenzwert als die für den Ist-Massenstrom ($\dot{m}_{ist}$) repräsentative Regelgröße verwendet wird, um hieraus die für die Öffnungsstellung des Dosierorgans repräsentative Stellgröße zu generieren und das Dosierorgan auf den Soll-Massenstrom ($\dot{m}_{ist}$) nachzuregeln.

15. Verfahren nach einem der Ansprüche 1 bis 14, **dadurch gekennzeichnet, dass** zur Regelung des Ist-Massenstromes ($\dot{m}_{ist}$) an Streugut wenigstens zwei regelbarer Dosierorgane eines Mehrscheibenstreuers, insbesondere eines Zweischeibenstreuers (1), mit jeweils einer, einem jeweiligen Dosierorgan zugeordneten und mit wenigstens einer Wurfschaufel (13) versehenen Verteilerscheibe (14) der Soll-Massenstrom ($\dot{m}_{soll}$) eines jeweiligen Dosierorgans dem rechnergestützten Regelgerät als Führungsgröße eingegeben wird, wobei ferner als Regelgröße das für den Ist-Massenstrom ($\dot{m}_{ist}$) repräsentative Drehmoment (M) je wenigstens einer Welle in einem Antriebsstrang einer jeweiligen Verteilerscheibe (14) unabhängig voneinander sensorisch ermittelt, an das Regelgerät übermittelt und hieraus jeweils der Ist-Massenstrom ($\dot{m}_{ist}$) anhand der wenigstens einen in dem Regelgerät oder in der diesem zugeordneten Speichereinrichtung hinterlegten funktionalen Zusammenhangs zwischen dem Drehmoment (M) und dem auf die jeweilige Verteilerscheibe (14) auftreffenden Massenstrom (m) an Streugut unabhängig voneinander ermittelt wird, woraufhin die Abweichung des Ist-Massenstromes ($\dot{m}_{ist}$) an Streugut von dem Soll-Massenstrom an Streugut ($\dot{m}_{soll}$) für jedes Dosierorgan ermittelt und je eine für die Öffnungsstellung des jeweiligen Dosierorgans repräsentative Stellgröße generiert wird, um das jeweilige Dosierorgan auf den Soll-Massenstrom ($\dot{m}_{soll}$) nachzuregeln, wobei der in dem Regelgerät oder in der diesem zugeordneten Speichereinrichtung hinterlegte funktionale Zusammenhang zwischen dem Drehmoment (M) und dem auf die jeweilige Verteilerscheibe (14) auftreffenden Massenstrom (m) an Streugut in Abhängigkeit der Neigung des Scheibenstreuers (1) um die wenigstens eine horizontale Achse (x, y) modifiziert wird, um die für die Öffnungsstellung des jeweiligen Dosierorgans repräsentative Stellgröße unter Berücksichtigung der Neigung des Scheibenstreuers (1) zu generieren.

16. Verfahren nach Anspruch 15, **dadurch gekennzeichnet, dass** die Neigung des Scheibenstreuers (1) sowohl um wenigstens eine erste, sich im Wesentlichen parallel zur Fahrtrichtung (F) erstreckende horizontale Achse (x) als auch um wenigstens eine zweite, sich im Wesentlichen senkrecht zur Fahrtrichtung (F) erstreckende horizontale Achse (y) ermittelt und an das Regelgerät übermittelt wird, und dass der wenigstens eine funktionale Zusammenhang zwischen dem Drehmoment (M) und dem auf die jeweilige Verteilerscheibe (14) auftreffenden Massenstrom ($\dot{m}$) an Streugut unabhängig voneinander in Abhängigkeit sowohl der Neigung des Scheibenstreuers (1) um die erste horizontale Achse (x) als auch um die zweite horizontale Achse (y) modifiziert wird, um die für die Öffnungsstellung des Dosierorgans repräsentative Stellgröße unter Berücksichtigung der Neigung des Scheibenstreuers (1) sowohl um die erste horizontale Achse (x) als auch um die zweite horizontale Achse (y) zu generieren.

17. Verfahren nach Anspruch 16, **dadurch gekennzeichnet, dass** der wenigstens eine funktionale Zusammenhang zwischen dem Drehmoment (M) und dem auf die eine Verteilerscheibe (14) auftreffenden Massenstrom ($\dot{m}$) an Streugut für das der einen Verteilerscheibe (14) zugeordnete Dosierorgan von der allgemeinen Formel

$$M = \dot{m} \cdot \omega \{R^2 - 0{,}5 \cdot [(r_{0x} + h \cdot \tan(\alpha))^2 + (r_{0y} + h \cdot \tan(\beta))^2]\} \cdot K_S$$

abgeleitet ist, und dass der wenigstens eine funktionale Zusammenhang zwischen dem Drehmoment (M) und dem auf die andere Verteilerscheibe (14) auftreffenden Massenstrom ($\dot{m}$) an Streugut für das der anderen Verteilerscheibe (14) zugeordnete Dosierorgan von der allgemeinen Formel

$$M = \dot{m} \cdot \omega \{R^2 - 0{,}5 \cdot [(r_{0x} - h \cdot \tan(\alpha))^2 + (r_{0y} + h \cdot \tan(\beta))^2]\} \cdot K_S$$

abgeleitet ist, wobei:

    M: Drehmoment der jeweiligen Verteilerscheibe (14),
    m: auf die jeweilige Verteilerscheibe (14) auftreffender Massenstrom an Streugut,
    $\omega$: ein von der Drehzahl (n) der jeweiligen Verteilerscheibe (14) abhängiger Faktor, wobei insbesondere $\omega = 2n \cdot n$,
    R: größter Radius der jeweiligen, mit der wenigstens einen Wurfschaufel (13) versehenen Verteilerscheibe (14),
    $r_{0x}$: Erstreckungskomponente des Aufgaberadius' ($r_0$) des Streugutes auf die jeweilige Verteilerscheibe (14) senkrecht zu der ersten, im Wesentlichen parallel zur Fahrtrichtung (F) angeordneten horizontalen Achse (x),
    $r_{0y}$: Erstreckungskomponente des Aufgaberadius' ($r_0$) des Streugutes auf die jeweilige Verteilerscheibe (14) senkrecht zu der zweiten, im Wesentlichen senkrecht zur Fahrtrichtung (F) angeordneten horizontalen Achse (y),
    h: Abstand einer oberhalb der jeweiligen Verteilerscheibe (14) angeordneten Dosieröffnung des Scheibenstreuers (1) von der jeweiligen, mit der wenigstens einen Wurfschaufel (13) versehenen Verteilerscheibe (14),
    $\alpha$: Neigung des Scheibenstreuers (1) um die erste horizontale Achse (x) im Wesentlichen parallel zur Fahrtrichtung (F),
    $\beta$: Neigung des Scheibenstreuers (1) um die zweite horizontale Achse (y) im Wesentlichen senkrecht zur Fahrtrichtung (F), und
    $K_S$: ein von der Geometrie der jeweiligen Verteilerscheibe (14) und/oder deren wenigstens einer Wurfschaufel (13) abhängiger Faktor.

18. Scheibenstreuer (1) mit wenigstens einer Verteilerscheibe (14), welche mit wenigstens einer Wurfschaufel (13) versehen ist, und mit wenigstens einem der Verteilerscheibe (14) zugeordneten, von einem rechnergesteuerten Regelgerät regelbaren Dosierorgan, wobei das Regelgerät einerseits mit wenigstens einem Sensor zur Erfassung des für den Ist-Massenstrom ($\dot{m}_{ist}$) repräsentativen Drehmomentes (M) wenigstens einer Welle in einem Antriebsstrang der Verteilerscheibe (14) als Regelgrö-βe, andererseits mit einer Eingabeeinrichtung in Wirkverbindung steht und das Regelgerät zur Ermittlung der Abweichung des Ist-Massenstromes ($\dot{m}_{ist}$) an Streugut von einem als Führungsgröße dienenden Soll-Massenstrom ($\dot{m}_{soll}$) ausgebildet ist, welcher in die Eingabeeinrichtung des Regelgerätes eingebbar ist und/oder welchen das Regelgerät in Abhängigkeit wenigstens eines in dessen Eingabeeinrichtung eingebbaren Parameters aus der Gruppe

   - Fahrgeschwindigkeit des Scheibenstreuers;
   - Soll-Streumenge pro Fläche; und
   - Arbeitsbreite

ermittelt, und wobei das Regelgerät ferner zur Generierung einer für die Öffnungsstellung des Dosierorgans repräsentativen Stellgröße anhand wenigstens eines in dem Regelgerät oder in einer diesem zugeordneten Speichereinrichtung hinterlegten funktionalen Zusammenhangs zwischen dem Drehmoment (M) und dem auf die Verteilerscheibe (14) auftreffenden Massenstrom ($\dot{m}$) an Streugut ausgebildet ist, um das Dosierorgan auf den Soll-Massenstrom ($\dot{m}_{soll}$) nachzuregeln, wobei in die Eingabeeinrichtung ferner die Neigung des Scheibenstreuers (1) um wenigstens eine horizontale Achse (x, y) eingebbar und/oder das Regelgerät ferner mit wenigstens einem Neigungssensor zur Ermittlung der Neigung des Scheibenstreuers (1) um wenigstens eine horizontale Achse (x, y) in Wirkverbindung steht, und das Regelgerät zur Modifizierung des dort oder in der diesem zugeordneten Speichereinrichtung hinterlegten funktionalen Zusammenhangs zwischen dem Drehmoment (M) und dem auf die Verteilerscheibe (14) auftreffenden Massenstrom (m) an Streugut in Abhängigkeit von der Neigung des Scheibenstreuers (1) um die wenigstens eine horizontale Achse (x, y) ausgebildet ist, um die für die Öffnungsstellung des Dosierorgans repräsentative Stellgröße unter Berücksichtigung der Neigung des Scheibenstreuers (1) zu generieren.

19. Scheibenstreuer nach Anspruch 18, **dadurch gekennzeichnet, dass** er zur Durchführung des Verfahrens nach wenigstens einem der Ansprüche 2 bis 17 ausgebildet ist.

**Claims**

1. Method for controlling the actual mass flow ($\dot{m}_{actual}$) of material to be spread of at least one controllable metering element of a disc spreader (1) comprising at least one spreader disc (14) which is assigned to the metering element and is provided with at least one throwing blade (13), wherein a setpoint mass flow ($\dot{m}_{setpoint}$) of material to be spread is determined depending on at least one parameter from the group

   - travel speed of the disc spreader;
   - setpoint spreading quantity per unit area; and
   - working width

and this setpoint mass flow ($\dot{m}_{setpoint}$) is input as reference variable to a computer-aided control device, wherein furthermore as control variable the torque (M), being representative of the actual mass flow ($\dot{m}_{actual}$), of at least one shaft in a drivetrain of the spreader disc (14) is determined by sensor, is communicated to the control device, and the actual mass flow ($\dot{m}_{actual}$) is determined therefrom on the basis of at least one functional relationship between the torque (M) and the mass flow ($\dot{m}$) of material to be spread that impinges on the spreader disc (14), said at least one functional relationship being stored in the control device or in a storage device assigned thereto, whereupon the deviation of the actual mass flow ($\dot{m}_{actual}$) of material to be spread from the setpoint mass flow of material to be spread ($\dot{m}_{setpoint}$) is determined and an actuating variable that is representative of the opening position of the metering element is generated in order to readjust the metering element to the setpoint mass flow ($\dot{m}_{setpoint}$), wherein at least one inclination of the disc spreader (1) about at least one horizontal axis (x, y) is determined and communicated to the control device, and the at least one functional relationship between the torque (M) and the mass flow ($\dot{m}$) of material to be spread that impinges on the spreader disc (14), said at least one functional relationship being stored in the control device or in the storage device assigned thereto, is modified depending on the inclination of the disc spreader (1) about the at least one horizontal axis (x, y) in order to generate the actuating variable that is representative of the opening position of the metering element taking into account the inclination of the disc spreader (1).

2.  Method according to Claim 1, **characterized in that** the at least one functional relationship between the torque (M) and the mass flow ($\dot{m}$) of material to be spread that impinges on the spreader disc (14) is modified by at least one correction variable ($\Delta r$) of the feed-in radius ($r_0$) of the material to be spread onto the spreader disc (14), said at least one correction variable being dependent on the inclination of the disc spreader (1).

3.  Method according to Claim 2, **characterized in that** the correction variable ($\Delta r$) of the feed-in radius ($r_0$) of the material to be spread onto the spreader disc (14) is derived from the general formula

$$\Delta r = h \cdot \tan (\alpha)\text{,}$$

wherein:

> $\Delta r$: inclination-dictated deviation of the feed-in radius ($r_0$) onto the spreader disc (14),
> h: distance between a metering opening of the disc spreader (1), said metering opening being arranged above the spreader disc (14), and the spreader disc (14) provided with the at least one throwing blade (13), and
> $\alpha$: inclination of the disc spreader (1) about the at least one horizontal axis (x, y),

wherein the correction variable ($\Delta r$) is added in particular to the feed-in radius ($r_0$) of the material to be spread onto the spreader disc (14).

4.  Method according to any of Claims 1 to 3, **characterized in that** the at least one functional relationship between the torque (M) and the mass flow ($\dot{m}$) of material to be spread that impinges on the spreader disc (14) is derived from the general formula

$$M = \dot{m} \cdot \omega \left\{ R^2 - 0.5 \cdot [r_0 + h \cdot \tan (\alpha)]^2 \right\} \cdot K_S\text{,}$$

wherein:

> M: torque of the spreader disc (14),
> $\dot{m}$: mass flow of material to be spread that impinges on the spreader disc (14),
> $\omega$: a factor dependent on the rotational speed (n) of the spreader disc (14), wherein in particular $\omega = 2\pi \cdot n$,
> R: largest radius of the spreader disc (14) provided with the at least one throwing blade (13),
> $r_0$: feed-in radius of the material to be spread onto the spreader disc (14),
> h: distance between a metering opening of the disc spreader (1), said metering opening being arranged above the spreader disc (14), and the spreader disc (14) provided with the at least one throwing blade (13),
> $\alpha$: inclination of the disc spreader (1) about the at least one horizontal axis (x, y), and
> $K_S$: a factor dependent on the geometry of the spreader disc (14) and/or on the at least one throwing blade (13) thereof.

5.  Method according to any of Claims 1 to 4, **characterized in that** the inclination of the disc spreader (1) both about at least one first horizontal axis (x) and about at least one second horizontal axis (y) arranged at an angle of greater than 0 in relation to the first horizontal axis (x) is determined and communicated to the control device, and **in that** the at least one functional relationship between the torque (M) and the mass flow ($\dot{m}$) of material to be spread that impinges on the spreader disc (14) is modified depending on the inclination of the disc spreader (1) both about the first horizontal axis (x) and about the second horizontal axis (y) in order to generate the actuating variable that is representative of the opening position of the metering element taking into account the inclination of the disc spreader (1) both about the first horizontal axis (x) and about the second horizontal axis (y).

6.  Method according to Claim 5, **characterized in that** the first horizontal axis (x) and the second horizontal axis (y) are arranged substantially perpendicular to one another, wherein in particular the first horizontal axis (x) extends in the travel direction (F) and the second horizontal axis (y) extends perpendicular to the travel direction (F) of the disc spreader (1).

7. Method according to Claim 5 or 6, **characterized in that** the at least one functional relationship between the torque (M) and the mass flow ($\dot{m}$) of material to be spread that impinges on the spreader disc (14) is derived from the general formula

$$M = \dot{m} \cdot \omega \{R^2 - 0.5 \cdot [(r_{0x} + h \cdot \tan(\alpha))^2 + (r_{0y} + h \cdot \tan(\beta))^2]\} \cdot K_S \,,$$

wherein:

M: torque of the spreader disc (14),
$\dot{m}$: mass flow of material to be spread that impinges on the spreader disc (14),
$\omega$: a factor dependent on the rotational speed (n) of the spreader disc (14), wherein in particular $\omega = 2\pi \cdot n$,
R: largest radius of the spreader disc (14) provided with the at least one throwing blade (13),
$r_{0x}$: extent component of the feed-in radius ($r_0$) of the material to be spread onto the spreader disc (14) perpendicular to the first horizontal axis (x),
$r_{0y}$: extent component of the feed-in radius ($r_0$) of the material to be spread onto the spreader disc (14) perpendicular to the second horizontal axis (y),
h: distance between a metering opening of the disc spreader (1), said metering opening being arranged above the spreader disc (14), and the spreader disc (14) provided with the at least one throwing blade (13),
$\alpha$: inclination of the disc spreader (1) about the first horizontal axis (x),
$\beta$: inclination of the disc spreader (1) about the second horizontal axis (y), and
$K_S$: a factor dependent on the geometry of the spreader disc (14) and/or on the at least one throwing blade (13) thereof.

8. Method according to any of Claims 1 to 7, **characterized in that** furthermore the rotational speed (n) of the spreader disc (14) or of at least one shaft in the drivetrain thereof

   - is determined by sensor and communicated to the control device or
   - is input into the control device by means of an input device,

   wherein the actuating variable that is representative of the opening position of the metering element is furthermore generated depending on the rotational speed (n) of the spreader disc (14) or of the shaft in the drivetrain thereof.

9. Method according to Claim 8, **characterized in that**

   - the at least one functional relationship between the torque (M) and the mass flow ($\dot{m}$) of material to be spread that impinges on the spreader disc (14) has at least one rotational-speed-dependent factor ($\omega$), or
   - for a plurality of rotational speeds (n) or rotational speed ranges of the spreader disc (14), a plurality of functional relationships between the torque (M) and the mass flow ($\dot{m}$) of material to be spread that impinges on the spreader disc (14) are stored in the control device or in the storage device assigned thereto, or
   - for a plurality of rotational speeds (n) or rotational speed ranges of the spreader disc (14), at least one correction factor is stored in the control device or in the storage device assigned thereto, by which at least one correction factor the at least one functional relationship between the torque (M) and the mass flow ($\dot{m}$) of material to be spread that impinges on the spreader disc (14) is corrected at the respective rotational speed (n) or in the respective rotational speed range,

   in order to generate the actuating variable that is representative of the opening position of the metering element taking into account the rotational speed (n) of the at least one spreader disc (14) of the disc spreader (1).

10. Method according to any of Claims 1 to 9, **characterized in that**, for a plurality of mass flows ($\dot{m}$) or mass flow ranges of material to be spread,

    - a plurality of functional relationships between the torque (M) and the respective mass flow ($\dot{m}$) or mass flow range of material to be spread that impinges on the spreader disc (14) are stored in the control device or in the storage device assigned thereto, or
    - at least one correction factor is stored in the control device or in the storage device assigned thereto, by which at least one correction factor the at least one functional relationship between the torque (M) and the mass flow

($\dot{m}$) of material to be spread that impinges on the spreader disc (14) is corrected at the respective mass flow ($\dot{m}$) or mass flow range of material to be spread,

in order to generate the actuating variable that is representative of the opening position of the metering element depending on the mass flow of material to be spread that impinges on the at least one spreader disc (14) of the disc spreader (1) .

11. Method according to any of Claims 1 to 10, **characterized in that**

- the at least one functional relationship between the torque (M) and the mass flow ($\dot{m}$) of material to be spread that impinges on the spreader disc (14) has at least one factor ($K_S$) dependent on the geometry of the spreader disc (14) and/or on the at least one throwing blade (13) thereof, or,
- for a plurality of different spreader discs (14) and/or for a plurality of spreader discs (14) provided with different throwing blades (13), a plurality of functional relationships between the torque (M) and the mass flow ($\dot{m}$) of material to be spread that impinges on the respective spreader disc (14) are stored in the control device or in the storage device assigned thereto, or,
- for a plurality of different spreader discs (14) and/or for a plurality of spreader discs (14) provided with different throwing blades (13), at least one correction factor is stored in the control device or in the storage device assigned thereto, by means of which at least one correction factor at least one first functional relationship between the torque (M) and the mass flow ($\dot{m}$) of material to be spread that impinges on a first spreader disc (14) is converted into at least one second functional relationship between the torque (M) and the mass flow ($\dot{m}$) of material to be spread that impinges on a second spreader disc (14),

in order to generate the actuating variable that is representative of the opening position of the metering element depending on the geometry of a respective spreader disc (14) and/or of a respective throwing blade (13) of a respective spreader disc (14) of the disc spreader (1).

12. Method according to any of Claims 1 to 11, **characterized in that** the at least one functional relationship between the torque (M) and the mass flow ($\dot{m}$) of material to be spread that impinges on the spreader disc (14) furthermore takes into account the current feed-in point of the material to be spread onto the spreader disc (14), in particular in the form of the current feed-in radius ($r_0$) of the material to be spread onto the spreader disc (14), said current feed-in point being alterable by means of a feed-in point adjusting device of the disc spreader (1).

13. Method according to any of Claims 1 to 12, **characterized in that**

(a) the torque (M) - representative of the actual mass flow ($\dot{m}_{actual}$) - of the at least one shaft in the drivetrain of the spreader disc (14) is determined by sensor by virtue of

- the torsion of at least one shaft in the drivetrain of the spreader disc (14); and/or
- the pressure difference of a hydraulic motor serving for the drive of the spreader disc (14); and/or
- the current consumption and/or voltage drop of an electric motor serving for the drive of the spreader disc (14) being determined by sensor; and/or

(b) the inclination of the disc spreader (1) about the at least one horizontal axis (x, y) is determined by means of at least one inclination sensor.

14. Method according to any of Claims 1 to 13, **characterized in that** the torque that is representative of the actual mass flow ($\dot{m}_{actual}$) is determined by sensor firstly, in particular at periodic time intervals, during idling with the metering element closed and hence the spreader disc (14) not loaded, and secondly when the spreader disc (14) is loaded with the actual mass flow ($\dot{m}_{actual}$), wherein the value determined during idling is subtracted from the total value determined under load in order to determine the difference value effected only by the actual mass flow ($\dot{m}_{actual}$) of the material to be spread, wherein this difference value is used as the control variable that is representative of the actual mass flow ($\dot{m}_{actual}$) in order to generate therefrom the actuating variable that is representative of the opening position of the metering element and to readjust the metering element to the setpoint mass flow ($\dot{m}_{setpoint}$).

15. Method according to any of Claims 1 to 14, **characterized in that**, for controlling of the actual mass flow ($\dot{m}_{actual}$) of material to be spread of at least two controllable metering elements of a multi-disc spreader, in particular of a two-disc spreader (1), comprising a respective spreader disc (14) which is assigned to a respective metering element and is provided with at least one throwing blade (13), the setpoint mass flow ($\dot{m}_{setpoint}$) of a respective metering element is input as reference variable to the computer-aided control device, wherein furthermore as control variable the torque (M) - representative of the actual mass flow ($\dot{m}_{actual}$) - of in each case at least one shaft in a drivetrain of a respective spreader disc (14) is determined by sensor independently of one another, is communicated to the control device, and the actual mass flow ($\dot{m}_{actual}$) is in each case determined therefrom independently of one another on the basis of the at least one functional relationship between the torque (M) and the mass flow ($\dot{m}$) of material to be spread that impinges on the respective spreader disc (14), said at least one functional relationship being stored in the control device or in the storage device assigned thereto, whereupon the deviation of the actual mass flow ($\dot{m}_{actual}$) of material to be spread from the setpoint mass flow of material to be spread ($\dot{m}_{setpoint}$) is determined for each metering element and a respective actuating variable that is representative of the opening position of the respective metering element is generated in order to readjust the respective metering element to the setpoint mass flow ($\dot{m}_{setpoint}$) , wherein the functional relationship between the torque (M) and the mass flow ($\dot{m}$) of material to be spread that impinges on the respective spreader disc (14), said functional relationship being stored in the control device or in the storage device assigned LhereLo, is modified depending on the inclination of the disc spreader (1) about the at least one horizontal axis (x, y) in order to generate the actuating variable that is representative of the opening position of the respective metering element taking into account the inclination of the disc spreader (1).

16. Method according to Claim 15, **characterized in that** the inclination of the disc spreader (1) both about at least one first horizontal axis (x) extending substantially parallel to the travel direction (F) and about at least one second horizontal axis (y) extending substantially perpendicular to the travel direction (F) is determined and communicated to the control device, and **in that** the at least one functional relationship between the torque (M) and the mass flow ($\dot{m}$) of material to be spread that impinges on the respective spreader disc (14) is modified independently of one another depending on the inclination of the disc spreader (1) both about the first horizontal axis (x) and about the second horizontal axis (y) in order to generate the actuating variable that is representative of the opening position of the metering element taking into account the inclination of the disc spreader (1) both about the first horizontal axis (x) and about the second horizontal axis (y).

17. Method according to Claim 16, **characterized in that** the at least one functional relationship between the torque (M) and the mass flow ($\dot{m}$) of material to be spread that impinges on the one spreader disc (14) for the metering element assigned to the one spreader disc (14) is derived from the general formula

$$M = \dot{m} \cdot \omega \{R^2 - 0.5 \cdot [(r_{0x} + h \cdot \tan(\alpha))^2 + (r_{0y} + h \cdot \tan(\beta))^2]\} \cdot K_S ,$$

and **in that** the at least one functional relationship between the torque (M) and the mass flow ($\dot{m}$) of material to be spread that impinges on the other spreader disc (14) for the metering element assigned to the other spreader disc (14) is derived from the general formula

$$M = \dot{m} \cdot \omega \{R^2 - 0.5 \cdot [(r_{0x} - h \cdot \tan(\alpha))^2 + (r_{0y} + h \cdot \tan(\beta))^2]\} \cdot K_S ,$$

wherein:

M: torque of the respective spreader disc (14),
$\dot{m}$: mass flow of material to be spread that impinges on the respective spreader disc (14),
$\omega$: a factor dependent on the rotational speed (n) of the respective spreader disc (14), wherein in particular $\omega = 2\pi \cdot n$,
R: largest radius of the respective spreader disc (14) provided with the at least one throwing blade (13),
$r_{0x}$: extent component of the feed-in radius ($r_0$) of the material to be spread onto the respective spreader disc (14) perpendicular to the first horizontal axis (x) arranged substantially parallel to the travel direction (F),
$r_{0y}$: extent component of the feed-in radius ($r_0$) of the material to be spread onto the respective spreader disc (14) perpendicular to the second horizontal axis (y) arranged substantially perpendicular to the travel direction (F),
h: distance between a metering opening of the disc spreader (1), said metering opening being arranged above the respective spreader disc (14), and the respective spreader disc (14) provided with the at least one throwing blade (13),
$\alpha$: inclination of the disc spreader (1) about the first horizontal axis (x) substantially parallel to the travel direction

(F),

$\beta$: inclination of the disc spreader (1) about the second horizontal axis (y) substantially perpendicular to the travel direction (F), and

$K_s$: a factor dependent on the geometry of the respective spreader disc (14) and/or on the at least one throwing blade (13) thereof.

18. Disc spreader (1) comprising at least one spreader disc (14) which is provided with at least one throwing blade (13), and comprising at least one metering element which is assigned to the spreader disc (14) and is controllable by a computer-controlled control device, wherein the control device is operatively connected firstly to at least one sensor for detecting the torque (M), being representative of the actual mass flow ($\dot{m}_{actual}$), of at least one shaft in a drivetrain of the spreader disc (14) as control variable and secondly to an input device, and the control device is configured for determining the deviation of the actual mass flow ($\dot{m}_{actual}$) of material to be spread from a setpoint mass flow ($\dot{m}_{setpoint}$) serving as reference variable, which setpoint mass flow is able to be input into the input device of the control device and/or is determined by the control device depending on at least one parameter that is able to be input into the input device of said control device from the group

   - travel speed of the disc spreader;
   - setpoint spreading quantity per unit area; and
   - working width,

   and wherein the control device is furthermore configured to generate an actuating variable that is representative of the opening position of the metering element on the basis of at least one functional relationship between the torque (M) and the mass flow ($\dot{m}$) of material to be spread that impinges on the spreader disc (14), said at least one functional relationship being stored in the control device or in a storage device assigned thereto, in order to readjust the metering element to the setpoint mass flow ($\dot{m}_{setpoint}$), wherein furthermore the inclination of the disc spreader (1) about at least one horizontal axis (x, y) is able to be input into the input device and/or the control device is furthermore operatively connected to at least one inclination sensor for determining the inclination of the disc spreader (1) about at least one horizontal axis (x, y), and the control device is configured for modifying the functional relationship between the torque (M) and the mass flow ($\dot{m}$) of material to be spread that impinges on the spreader disc (14), said functional relationship being stored in said control device or in the storage device assigned thereto, depending on the inclination of the disc spreader (1) about the at least one horizontal axis (x, y) in order to generate the actuating variable that is representative of the opening position of the metering element taking into account the inclination of the disc spreader (1).

19. Disc spreader according to Claim 18, **characterized in that** it is configured for carrying out the method according to at least one of Claims 2 to 17.

**Revendications**

1. Procédé de régulation du flux massique réel ($\dot{m}_{réel}$) de produit d'épandage d'au moins un organe de dosage régulable d'un épandeur à disque (1) avec au moins un disque d'épandage (14) associé à l'organe de dosage et pourvu d'au moins une aube d'éjection (13), dans lequel un flux massique théorique ($\dot{m}_{théorique}$) de produit d'épandage est déterminé en fonction d'au moins un paramètre appartenant au groupe suivant :

   - vitesse de conduite de l'épandeur à disque ;
   - quantité théorique à épandre par surface ; et
   - largeur de travail
   et ce flux massique théorique ($\dot{m}_{théorique}$) est amené comme grandeur de référence à un appareil de régulation assisté par ordinateur, le couple de rotation (M) représentatif du flux massique réel ($\dot{m}_{réel}$) d'au moins un arbre dans une chaîne cinématique du disque d'épandage (14) étant en outre déterminé par voie de capteurs comme grandeur de régulation, transmis à l'appareil de régulation et servant de calcul pour le flux massique réel ($\dot{m}_{réel}$) à l'aide d'au moins un rapport fonctionnel entre le couple de rotation (M) et le flux massique (m) de produit d'épandage arrivant sur le disque d'épandage (14) mémorisé dans l'appareil de régulation ou dans le dispositif de mémoire associé à celui-ci, à la suite de quoi l'écart du flux massique réel ($\dot{m}_{réel}$) de produit d'épandage par rapport au flux massique théorique de produit d'épandage ($\dot{m}_{théorique}$) est déterminé et une grandeur de réglage représentative est générée pour la position d'ouverture de l'organe de dosage, pour régler a posteriori l'organe de dosage sur le flux massique théorique ($\dot{m}_{théorique}$) ;

**caractérisé en ce qu'**au moins une inclinaison de l'épandeur à disque (1) est déterminée par rapport au moins à un axe horizontal (x, y) et est transmise à l'appareil de régulation et que l'au moins un rapport fonctionnel entre le couple de rotation (M) et le flux massique (m) de produit d'épandage arrivant sur le disque d'épandage (14) mémorisé dans l'appareil de régulation ou dans le dispositif de mémoire lui étant associé est modifié en fonction de l'inclinaison de l'épandeur à disque (1) par rapport à l'au moins un axe horizontal (x, y), pour générer la grandeur de réglage représentative de la position d'ouverture de l'organe de dosage en tenant compte de l'inclinaison de l'épandeur à disque (1).

2. Procédé selon la revendication 1, **caractérisé en ce que** l'au moins un rapport fonctionnel entre le couple de rotation (M) et le flux massique (m) de produit d'épandage arrivant sur le disque d'épandage (14) est modifié, en fonction de l'inclinaison de l'épandeur à disque (1), d'au moins une grandeur de correction ($\Delta r$) du rayon d'alimentation ($r_0$) du produit d'épandage sur le disque d'épandage (14).

3. Procédé selon la revendication 2, **caractérisé en ce que** la grandeur de correction ($\Delta r$) du rayon d'alimentation ($r_0$) du produit d'épandage sur le disque d'épandage (14) est dérivée de la formule générale suivante :

$$\Delta r = h \cdot \tan (\alpha)$$

avec :

$\Delta r$ : écart dépendant de l'inclinaison du rayon d'alimentation ($r_0$) sur le disque d'épandage (14) ;
h : distance entre une ouverture de dosage de l'épandeur à disque (1) disposée au-dessus du disque d'épandage (14) et le disque d'épandage (14) pourvu d'au moins une aube d'éjection (13) ; et
$\alpha$ : inclinaison de l'épandeur à disque (1) par rapport à l'au moins un axe horizontal (x, y) ;

dans lequel la grandeur de correction ($\Delta r$) est notamment ajoutée au rayon d'alimentation ($r_0$) du produit d'épandage sur le disque d'épandage (14).

4. Procédé selon l'une quelconque des revendications 1 à 3, **caractérisé en ce que** l'au moins un rapport fonctionnel entre le couple de rotation (M) et le flux massique (m) de produit d'épandage arrivant sur le disque d'épandage (14) est dérivé de la formule générale suivante :

$$M = \dot{m} \cdot \omega (R^2 - 0{,}5 \cdot [r_0 + h \cdot \tan (\alpha)]^2\} \cdot K_S$$

avec :

M : couple de rotation du disque d'épandage (14) ;
m : flux massique de produit d'épandage arrivant sur le disque d'épandage (14) ;
w : facteur dépendant de la vitesse de rotation (n) du disque d'épandage (14), avec notamment $\omega = 2n \cdot n$ ;
R : plus grand rayon du disque d'épandage (14) pourvu d'au moins une aube d'éjection (13) ;
$r_0$ : rayon d'alimentation du produit d'épandage sur le disque d'épandage (14) ;
h : distance entre une ouverture de dosage de l'épandeur à disque (1) disposée au-dessus du disque d'épandage (14) et le disque d'épandage (14) pourvu d'au moins une aube d'éjection (13) ;
$\alpha$ : inclinaison de l'épandeur à disque (1) par rapport à l'au moins un axe horizontal (x, y) ; et
$K_S$ : facteur dépendant de la forme géométrique du disque d'épandage (14) et/ou de celle d'au moins une aube d'éjection (13).

5. Procédé selon l'une quelconque des revendications 1 à 4, **caractérisé en ce que** l'inclinaison de l'épandeur à disque (1) est déterminée tant par rapport à au moins un premier axe horizontal (x) que par rapport à au moins un deuxième axe horizontal (y) disposé selon un angle supérieur à 0 par rapport au premier axe horizontal (x) et est transmise à l'appareil de régulation et que l'au moins un rapport fonctionnel entre le couple de rotation (M) et le flux massique (m) de produit d'épandage arrivant sur le disque d'épandage (14) est modifié en fonction tant de l'inclinaison de l'épandeur à disque (1) par rapport au premier axe horizontal (x) que par rapport au deuxième axe horizontal (y), pour générer la grandeur de réglage représentative de la position d'ouverture de l'organe de dosage en tenant compte de l'inclinaison de l'épandeur à disque (1) tant par rapport au premier axe horizontal (x) que par rapport au deuxième axe horizontal (y).

**6.** Procédé selon la revendication 5, **caractérisé en ce que** le premier axe horizontal (x) et le deuxième axe horizontal (y) sont disposés pour l'essentiel perpendiculairement l'un par rapport à l'autre, dans lequel le premier axe horizontal (x) s'étend notamment dans la direction de conduite (F) et le deuxième axe horizontal (y) s'étend perpendiculairement à la direction de conduite (F) de l'épandeur à disque (1).

**7.** Procédé selon la revendication 5 ou 6, **caractérisé en ce que** l'au moins un rapport fonctionnel entre le couple de rotation (M) et le flux massique (m) de produit d'épandage arrivant sur le disque d'épandage (14) est dérivé de la formule générale suivante :

$$M = \dot{m} \cdot \omega \, (R^2 - 0{,}5 \cdot [(r_{0x} + h \cdot \tan{(\alpha)})^2 + (r_{0y} + h \cdot \tan{(\beta)})^2]\} \cdot K_S$$

avec :

M : couple de rotation du disque d'épandage (14) ;
m : flux massique de produit d'épandage arrivant sur le disque d'épandage (14) ;
$\omega$ : facteur dépendant de la vitesse de rotation (n) du disque d'épandage (14), avec notamment $\omega = 2\pi \cdot n$ ;
R : plus grand rayon du disque d'épandage (14) pourvu d'au moins une aube d'éjection (13) ;
$r_{0x}$ : composante d'extension du rayon d'alimentation ($r_0$) du produit d'épandage sur le disque d'épandage (14) perpendiculairement au premier axe horizontal (x) ;
$r_{0y}$ : composante d'extension du rayon d'alimentation ($r_0$) du produit d'épandage sur le disque d'épandage (14) perpendiculairement au deuxième axe horizontal (y) ;
h : distance entre une ouverture de dosage de l'épandeur à disque (1) disposée au-dessus du disque d'épandage (14) et le disque d'épandage (14) pourvu d'au moins une aube d'éjection (13) ;
$\alpha$ : inclinaison de l'épandeur à disque (1) par rapport au premier axe horizontal (x) ;
$\beta$ : inclinaison de l'épandeur à disque (1) par rapport au deuxième axe horizontal (y) ; et
$K_S$ : facteur dépendant de la forme géométrique du disque d'épandage (14) et/ou de celle d'au moins une aube d'éjection (13).

**8.** Procédé selon l'une quelconque des revendications 1 à 7, **caractérisé en ce qu'**en outre, la vitesse de rotation (n) du disque d'épandage (14) ou d'au moins un arbre dans sa chaîne cinématique :

- est déterminée par voie de capteurs et est transmise à l'appareil de régulation ; ou
- est entrée dans l'appareil de régulation au moyen d'un dispositif d'entrée ;

dans lequel la grandeur de réglage représentative de la position d'ouverture de l'organe de dosage est en outre générée en fonction de la vitesse de rotation (n) du disque d'épandage (14) ou de l'arbre dans sa chaîne cinématique.

**9.** Procédé selon la revendication 8, **caractérisé en ce que** :

- l'au moins un rapport fonctionnel entre le couple de rotation (M) et le flux massique (m) de produit d'épandage arrivant sur le disque d'épandage (14) présente au moins un facteur (m) dépendant de la vitesse de rotation ; ou
- pour une pluralité de vitesses de rotation (n) ou de plages de vitesses de rotation du disque d'épandage (14), une pluralité de rapports fonctionnels entre le couple de rotation (M) et le flux massique (m) de produit d'épandage arrivant sur le disque d'épandage (14) sont mémorisés dans l'appareil de régulation ou dans le dispositif de mémoire lui étant associé ; ou
- pour une pluralité de vitesses de rotation (n) ou de plages de vitesses de rotation du disque d'épandage (14), au moins un facteur de correction est mémorisé dans l'appareil de régulation ou dans le dispositif de mémoire lui étant associé, ledit facteur servant à corriger au moins un rapport fonctionnel entre le couple de rotation (M) et le flux massique (m) de produit d'épandage arrivant sur le disque d'épandage (14) à la vitesse de rotation (n) respective ou dans la plage de vitesses de rotation respective ;

pour générer la grandeur de réglage représentative de la position d'ouverture de l'organe de dosage en tenant compte de la vitesse de rotation (n) de l'au moins un disque d'épandage (14) de l'épandeur à disque (1).

**10.** Procédé selon l'une quelconque des revendications 1 à 9, **caractérisé en ce que** pour une pluralité de flux massiques (m) ou de plages de flux massiques de produit d'épandage :

- une pluralité de rapports fonctionnels entre le couple de rotation (M) et le flux massique (m) ou la plage de flux massiques respectifs de produit d'épandage arrivant sur le disque d'épandage (14) sont mémorisés dans l'appareil de régulation ou dans le dispositif de mémoire lui étant associé ; ou
- au moins un facteur de correction est mémorisé dans l'appareil de régulation ou dans le dispositif de mémoire lui étant associé, ledit facteur servant à corriger au moins un rapport fonctionnel entre le couple de rotation (M) et le flux massique (m) de produit d'épandage arrivant sur le disque d'épandage (14) dans le flux massique (m) ou la plage de flux massiques respectifs de produit d'épandage ;

pour générer la grandeur de réglage représentative de la position d'ouverture de l'organe de dosage en fonction du flux massique de produit d'épandage arrivant sur l'au moins un disque d'épandage (14) de l'épandeur à disque (1).

**11.** Procédé selon l'une quelconque des revendications 1 à 10, **caractérisé en ce que** :

- l'au moins un rapport fonctionnel entre le couple de rotation (M) et le flux massique (m) de produit d'épandage arrivant sur le disque d'épandage (14) comporte au moins un facteur ($K_S$) dépendant de la forme géométrique du disque d'épandage (14) et/ou de celle d'au moins une aube d'éjection (13) ; ou
- pour une pluralité de disques d'épandage (14) différents et/ou pour une pluralité de disques d'épandage (14) pourvus de pales d'éjection (13) différentes, une pluralité de rapports fonctionnels entre le couple de rotation (M) et le flux massique (m) de produit d'épandage arrivant sur le disque d'épandage (14) respectif sont mémorisés dans l'appareil de régulation ou dans le dispositif de mémoire lui étant associé ; ou
- pour une pluralité de disques d'épandage différents (14) et/ou pour une pluralité de disques d'épandage (14) pourvus de pales d'éjection différentes (13), au moins un facteur de correction est mémorisé dans l'appareil de régulation ou dans le dispositif de mémoire lui étant associé, ledit facteur permettant de convertir au moins un premier rapport fonctionnel entre le couple de rotation (M) et le flux massique (m) de produit d'épandage arrivant sur un premier disque d'épandage (14) en au moins un deuxième rapport fonctionnel entre le couple de rotation (M) et le flux massique (m) de produit d'épandage arrivant sur un deuxième disque d'épandage (14) ;

pour générer la grandeur de réglage représentative de la position d'ouverture de l'organe de dosage en fonction de la forme géométrique d'un disque d'épandage (14) respectif et/ou d'une aube d'éjection (13) respective d'un disque d'épandage (14) respectif de l'épandeur à disque (1).

**12.** Procédé selon l'une quelconque des revendications 1 à 11, **caractérisé en ce que** l'au moins un rapport fonctionnel entre le couple de rotation (M) et le flux massique (m) de produit d'épandage arrivant sur le disque d'épandage (14) prend en outre en compte le point cible actuel du produit d'épandage sur le disque d'épandage (14) pouvant être modifié à l'aide d'un dispositif de réglage de point cible de l'épandeur à disque (1), notamment sous la forme du rayon d'alimentation ($r_0$) actuel du produit d'épandage sur le disque d'épandage (14).

**13.** Procédé selon l'une quelconque des revendications 1 à 12, **caractérisé en ce que** :

(a) le couple de rotation (M), représentatif du flux massique réel ($\dot{m}_{réel}$) , de l' au moins un arbre prévu dans la chaîne cinématique du disque d'épandage (14) est déterminé de façon à déterminer par voie de capteurs :

- la rotation d'au moins un arbre dans la chaîne cinématique du disque d'épandage (14) ; et/ou
- la différence de pression d'un hydromoteur servant à entraîner le disque d'épandage (14) ; et/ou
- l'augmentation de courant et/ou la baisse de courant d'un moteur électrique servant à entraîner le disque d'épandage (14) ; et/ou

(b) l'inclinaison de l'épandeur à disque (1) est déterminée par rapport à l'au moins un axe horizontal (x, y) à l'aide d'au moins un capteur d'inclinaison.

**14.** Procédé selon l'une quelconque des revendications 1 à 13, **caractérisé en ce que** le couple de rotation représentatif du flux massique réel ($\dot{m}_{réel}$) est déterminé par voie de capteurs d'une part à vide avec l'organe de dosage fermé, notamment à des intervalles de temps périodiques, et par conséquent avec le disque d'épandage (14) non chargé, d'autre part en situation de charge du disque d'épandage (14) avec le flux massique réel ($\dot{m}_{réel}$), dans lequel la valeur déterminée en cycle à vide est soustraite à la valeur totale déterminée en charge, pour déterminer la valeur différentielle uniquement induite par le flux massique réel ($\dot{m}_{réel}$) du produit d'épandage, dans lequel cette valeur différentielle est utilisée comme grandeur de régulation représentative du flux massique réel ($\dot{m}_{réel}$), pour générer à partir d'elle la grandeur de réglage représentative de la position d'ouverture de l'organe de dosage et rerégler l'organe de dosage sur le flux massique théorique ($\dot{m}_{théorique}$) .

15. Procédé selon l'une quelconque des revendications 1 à 14, **caractérisé en ce que** pour réguler le flux massique réel ($\dot{m}_{réel}$) de produit d'épandage d'au moins deux organes de dosage réglables d'un épandeur à disque multiple, notamment d'un épandeur à deux disques (1), avec respectivement un disque d'épandage (14) associé à un organe de dosage respectif et pourvu d'au moins une aube d'éjection (13), le flux massique théorique ($\dot{m}_{théorique}$) d'un organe de dosage respectif est amené à l'appareil de régulation assisté par ordinateur comme grandeur de référence, dans lequel en outre le couple de rotation (M) représentatif du flux massique réel ($\dot{m}_{réel}$) de l'au moins un arbre respectif prévu dans une chaîne cinématique d'un disque d'épandage (14) respectif est déterminé indépendamment par voie de capteurs comme grandeur de régulation, transmis à l'appareil de régulation et qu'il sert à calculer indépendamment respectivement le flux massique réel ($\dot{m}_{réel}$) à l'aide de l'au moins un rapport fonctionnel entre le couple de rotation (M) et le flux massique (m) de produit d'épandage arrivant sur le disque d'épandage (14) respectif mémorisé dans l'appareil de régulation ou dans le dispositif de mémoire lui étant associé, à la suite de quoi l'écart du flux massique réel ($\dot{m}_{réel}$) de produit d'épandage par rapport au flux massique théorique de produit d'épandage ($\dot{m}_{théorique}$) est déterminé pour chaque organe de dosage et qu'une grandeur de réglage représentative de la position d'ouverture de l'organe de dosage respectif est générée pour rerégler l'organe de dosage respectif sur le flux massique théorique ($\dot{m}_{théorique}$) , dans lequel le rapport fonctionnel entre le couple de rotation (M) et le flux massique (m) de produit d'épandage arrivant sur le disque d'épandage (14) respectif est modifié dans l'appareil de régulation ou dans le dispositif de mémoire lui étant associé en fonction de l'inclinaison de l'épandeur à disque (1) par rapport à l'au moins un axe horizontal (x, y), pour générer la grandeur de réglage représentative de la position d'ouverture de l'organe de dosage respectif en tenant compte de l'inclinaison de l'épandeur à disque (1).

16. Procédé selon la revendication 15, **caractérisé en ce que** l'inclinaison de l'épandeur à disque (1) est déterminée tant par rapport à au moins un premier axe horizontal (x) s'étendant pour l'essentiel parallèlement à la direction de conduite (F) que par rapport à au moins un deuxième axe horizontal (y) s'étendant pour l'essentiel perpendiculairement à la direction de conduite (F) et est transmise à l'appareil de régulation et que l'au moins un rapport fonctionnel entre le couple de rotation (M) et le flux massique (m) de produit d'épandage arrivant sur le disque d'épandage (14) respectif est modifié indépendamment en fonction tant de l'inclinaison de l'épandeur à disque (1) par rapport au premier axe horizontal (x) que par rapport au deuxième axe horizontal (y), pour générer la grandeur de réglage représentative de la position d'ouverture de l'organe de dosage en tenant compte de l'inclinaison de l'épandeur à disque (1) tant par rapport au premier axe horizontal (x) que par rapport au deuxième axe horizontal (y).

17. Procédé selon la revendication 16, **caractérisé en ce que** l'au moins un rapport fonctionnel entre le couple de rotation (M) et le flux massique (m) de produit d'épandage arrivant sur le premier disque d'épandage (14) pour l'organe de dosage associé au premier disque d'épandage (14) est dérivé de la formule générale suivante :

$$M = \dot{m} \cdot \omega \, (R^2 - 0,5 \cdot [(r_{0x} + h \cdot \tan(\alpha))^2 + (r_{0y} + h \cdot \tan(\beta))^2]\} \cdot K_S$$

et que l'au moins un rapport fonctionnel entre le couple de rotation (M) et le flux massique (m) de produit d'épandage arrivant sur l'autre disque d'épandage (14) pour l'organe de dosage associé à l'autre disque d'épandage (14) est dérivé de la formule générale suivante :

$$M = \dot{m} \cdot \omega \, (R^2 - 0,5 \cdot [(r_{0x} - h \cdot \tan(\alpha))^2 + (r_{0y} + h \cdot \tan(\beta))^2]\} \cdot K_S$$

avec :

    M : couple de rotation du disque d'épandage (14) respectif ;
    m : flux massique de produit d'épandage arrivant sur le disque d'épandage (14) respectif ;
    w : facteur dépendant de la vitesse de rotation (n) du disque d'épandage (14) respectif, avec notamment $\omega = 2\pi \cdot n$ ;
    R : plus grand rayon du disque d'épandage (14) respectif pourvu d'au moins une aube d'éjection (13) ;
    $r_{0x}$ : composante d'extension du rayon d'alimentation ($r_0$) du produit d'épandage sur le disque d'épandage (14) respectif perpendiculairement au premier axe horizontal (x) disposé pour l'essentiel parallèlement à la direction de conduite (F) ;
    $r_{0y}$ : composante d'extension du rayon d'alimentation ($r_0$) du produit d'épandage sur le disque d'épandage (14) perpendiculairement au deuxième axe horizontal (y) disposé pour l'essentiel perpendiculairement à la direction de conduite (F) ;

h : distance entre une ouverture de dosage de l'épandeur à disque (1) disposée au-dessus du disque d'épandage (14) respectif et du disque d'épandage (14) respectif pourvu d'au moins une aube d'éjection (13) ;

$\alpha$ : inclinaison de l'épandeur à disque (1) par rapport au premier axe horizontal (x) pour l'essentiel parallèlement à la direction de conduite (F) ;

$\beta$ : inclinaison de l'épandeur à disque (1) par rapport au deuxième axe horizontal (y) pour l'essentiel perpendiculairement à la direction de conduite (F) ; et

$K_S$ : facteur dépendant de la forme géométrique du disque d'épandage (14) respectif et/ou de celle d'au moins une aube d'éjection (13).

18. Épandeur à disque (1) avec au moins un disque d'épandage (14) pourvu d'au moins une aube d'éjection (13) et avec au moins un organe de dosage associé au disque d'épandage (14) et pouvant être réglé par un appareil de régulation assisté par ordinateur, dans lequel l'appareil de régulation est en liaison active d'une part avec au moins un capteur de détection du couple de rotation (M) représentatif du flux massique réel ($\dot{m}_{réel}$) d'au moins un arbre prévu dans une chaîne cinématique du disque d'épandage (14) comme grandeur de régulation, d'autre part avec un dispositif d'entrée et l'appareil de régulation est réalisé pour déterminer l'écart entre le flux massique réel ($\dot{m}_{réel}$) de produit d'épandage et un flux massique théorique ($\dot{m}_{théorique}$) servant de grandeur de référence, ledit flux étant entré dans le dispositif d'entrée de l'appareil de régulation et/ou l'appareil de régulation le déterminant en fonction d'au moins un paramètre pouvant être entré dans son dispositif d'entrée, parmi le groupe comprenant :

   - la vitesse de conduite de l'épandeur à disque ;
   - la quantité théorique à épandre par surface ; et
   - la largeur de travail ;

   et dans lequel l'appareil de régulation est en outre réalisé pour générer une grandeur de réglage représentative de la position d'ouverture de l'organe de dosage à l'aide d'au moins un rapport fonctionnel entre le couple de rotation (M) et le flux massique (m) de produit d'épandage arrivant sur le disque d'épandage (14) mémorisé dans l'appareil de régulation ou le dispositif de mémoire associé à celui-ci, pour régler a posteriori l'organe de dosage sur le flux massique théorique ($\dot{m}_{théorique}$) ;
   **caractérisé en ce que** l'inclinaison de l'épandeur à disque (1) par rapport au moins à un axe horizontal (x, y) peut en outre être entrée dans le dispositif d'entrée et/ou l'appareil de régulation peut en outre être en liaison active avec au moins un capteur d'inclinaison pour déterminer l'inclinaison de l'épandeur à disque (1) par rapport au moins à un axe horizontal (x, y) et que l'appareil de régulation est réalisé de façon à modifier le rapport fonctionnel entre le couple de rotation (M) et le flux massique (m) de produit d'épandage arrivant sur le disque d'épandage (14) y étant mémorisé ou lui étant associé dans le dispositif de mémoire en fonction de l'inclinaison de l'épandeur à disque (1) par rapport à l'au moins un axe horizontal (x, y), de façon à générer la grandeur de réglage représentative de la position d'ouverture de l'organe de dosage en tenant compte de l'inclinaison de l'épandeur à disque (1).

19. Épandeur à disque selon la revendication 18, **caractérisé en ce qu'**il est réalisé de façon à permettre la mise en œuvre du procédé selon au moins l'une quelconque des revendications 2 à 17.

X  Y  11

β

1

12a, 12b    h

13    14

Δry

β

⊤
F    2

Fig. 1

Y    X

11

α

11b

1    11a    12a    h

12b

h

13    14    Δrx

13    14    α

⊙
F

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0982571 A1
- DE 102012111144 A1
- DE 19825917 A1
- EP 0963690 A1
- EP 2625945 A1
- EP 3081067 A1
- EP 2767149 A1
- EP 3241421 B1
- EP 2415338 A1
- EP 3305055 A1
- EP 3305056 A1